# EUROPÄISCHE PATENTSCHRIFT

(11) **EP 2 571 735 B1**
(45) Veröffentlichungstag und Bekanntmachung des Hinweises auf die Patenterteilung: **11.09.2019**
(21) Anmeldenummer: 11709004.3
(22) Anmeldetag: 07.03.2011
(51) Int. Cl.: B60T 1/10, B60T 17/02, B60K 6/12

(54) **DRUCKSTEUEREINRICHTUNG FÜR EIN FAHRZEUG SOWIE VERFAHREN ZUR DRUCKSTEUERUNG**
VEHICLE COMPRESSED AIR CONTROL DEVICE AND CONTROL METHOD THEREOF
DISPOSITIF DE COMMANDE À AIR COMPRIMÉ POUR VEHICULE ET PROCEDE DE COMMANDE UN TEL DISPOSITIF

(30) Priorität: 05.08.2010 DE 102010033539; 15.05.2010 DE 102010020672
(43) Veröffentlichungstag der Anmeldung: 27.03.2013
(73) Patentinhaber: WABCO GmbH, 30453 Hannover (DE)
(72) Erfinder: EISFELDER, Stephan, 30926 Seelze (DE); STUMBERG, Ingo, 30625 Hannover (DE); WIEHEN, Christian, 30938 Burgwedel (DE); WILKEN, Christoph, 48499 Salzbergen (DE)
(74) Vertreter: Lauerwald, Jörg
(86) Internationale Anmeldenummer: PCT/EP2011/001111
(87) Internationale Veröffentlichungsnummer: WO 2011/144271

(56) Entgegenhaltungen:
- DE-A1-102005 039 281
- DE-A1-102007 033 693
- US-A1- 2010 095 661

## Beschreibung

Die Erfindung betrifft eine Drucksteuereinrichtung für ein Fahrzeug gemäß dem Patentanspruch 1. Die Erfindung betrifft ferner eine Fahrzeug-Druckluftanlage gemäß dem Anspruch 14 sowie einen hierfür angepassten Druckluftkompressor gemäß Anspruch 17. Die Erfindung betrifft außerdem ein Verfahren zur Drucksteuerung in einem Fahrzeug gemäß dem Anspruch 18.

Im Bereich von Nutzfahrzeugen, d. h. Lastkraftwagen und Omnibussen, ist die Verwendung von Druckluft-Bremsanlagen gebräuchlich. Derartige Fahrzeuge weisen daher Elemente zur Druckluft-Erzeugung und Speicherung auf, wie z. B. einen Kompressor und einen Speicherbehälter. Der Kompressor wird üblicherweise durch den Antriebsmotor des Fahrzeugs angetrieben, wobei feste und teilweise auch lösbare Kopplungen, z. B. über eine steuerbare Kupplung, zwischen dem Kompressor und dem Antriebsmotor vorgesehen werden.

Aus der DE 10 2005 039 281 A1 geht der Vorschlag hervor, einen Kompressor als zusätzliche Antriebseinheit eines Fahrzeugs zu nutzen. Hierbei wird vorgeschlagen, die vorhandenen Ventile eines Kompressors, nämlich ein Hochdruckventil und ein Niederdruckventil, mechanisch über einen Nockentrieb zu betreiben. Um zwischen den Betriebsmodi Kompressormodus und Motormodus umzuschalten, wird der Einsatz eines aus der Motorentechnik bekannten Camphasers vorgeschlagen. Auch aus der DE 10 2007 033 693 A1 geht ein ähnlicher Vorschlag hervor.

Der Einsatz eines Nockentriebs mit einem Camphaser ist allerdings mechanisch und konstruktiv relativ aufwendig und teuer. Zudem erfordert dies eine Neukonstruktion des Zylinderkopfs des Kompressors.

Der Erfindung liegt daher die Aufgabe zugrunde, Möglichkeiten zum Betrieb eines Druckluftkompressors sowohl zur Drucklufterzeugung als auch als zusätzlichen Antrieb für das Fahrzeug anzugeben, die einfacher und kostengünstiger realisierbar sind.

Diese Aufgabe wird durch die Erfindung gemäß den Ansprüchen 1, 14, 17 und 18 gelöst. Die Unteransprüche geben vorteilhafte Ausgestaltungen der Erfindung an.

Der Erfindung liegt der Gedanke zu Grunde, den in einem Nutzfahrzeug üblicherweise vorhandenen Druckluftkompressor zur Unterstützung des Antriebsmotors des Fahrzeuges zu nutzen. So kann der Druckluftkompressor zur Unterstützung eines Beschleunigungsvorgangs des Fahrzeugs oder bei Bergauffahrt sozusagen als Pneumatikmotor betrieben werden, indem Druckluft aus einem Druckluftspeicher des Fahrzeugs zurück in den Kompressor gefördert wird, und zwar derart synchronisiert zur Bewegung des Kompressors, dass der Antriebsmotor ein unterstützendes Drehmoment erfährt. Hierdurch kann, ähnlich wie bei einem Elektro-Hybridantrieb eines Personenkraftwagens, der üblicherweise als Verbrennungsmotor ausgeführte Antriebsmotor des Fahrzeugs mit geringerer Nennleistung ausgeführt werden. Somit kann ein kleinerer, leichterer und kostengünstigerer Antriebsmotor eingesetzt werden. Dieser Betriebsmodus wird auch als Druckluftexpansionsmodus bezeichnet.

Dementsprechend wird in einem Drucklufterzeugungsmodus von dem Kompressor komprimierte Druckluft von einem Kompressionsraum des Druckluftkompressors in die Druckluftversorgungs- und Speicheranlage geleitet und in einem Druckluftexpansionsmodus Druckluft von der Druckluftversorgungs- und Speicheranlage in den Kompressionsraum geleitet, wo die Druckluft zur Antriebsunterstützung des Fahrzeugs expandiert wird.

In einem mittelschweren Nutzfahrzeug heutzutage üblicher Bauart kann bei Verwendung eines handelsüblichen Druckluftkompressors mit der Erfindung beispielsweise ein zusätzliches mittleres Antriebsdrehmoment von ca. 50 Nm erzeugt werden, was im Vergleich zu einem Antriebsmoment eines Diesel-Antriebsmotors von etwa 700 Nm ein beträchtlicher Wert ist.

Erfindungsgemäß ist weiter vorgesehen, dass die Drucksteuereinrichtung eingerichtet ist zur Umschaltung von dem Drucklufterzeugungsmodus in den Druckluftexpansionsmodus und umgekehrt durch elektrische Betätigung einer oder mehrer elektrisch betätigbarer Ventile der Ventileinrichtung durch das elektronische Steuergerät. Hierfür kann das elektronische Steuergerät mit einer entsprechenden Programmierung zur Betätigung der elektrisch betätigbaren Ventile bei Erkennung eines Umschalt-Bedarfs versehen sein. Vorteilhaft werden somit für die Umschaltung von dem Drucklufterzeugungsmodus in den Druckluftexpansionsmodus und zurück keine aufwendigen mechanischen Konstruktionen wie der eingangs erwähnte Camphaser benötigt. Stattdessen können hierfür elektrisch betätigbare Ventile vorgesehen werden, die durch das elektronische Steuergerät betätigt werden. Dies hat den Vorteil, dass die Erfindung mit vorhandenen handelsüblichen Druckluftkompressoren realisiert werden kann, wobei an den Druckluftkompressoren je nach Ausgestaltung und Anordnung der elektrisch betätigbaren Ventile entweder nur einfache, kostengünstige Veränderungen oder überhaupt keine Veränderungen erforderlich sind. Im letzteren Fall können die elektrisch betätigbaren Ventile dem Druckluftkompressor sozusagen vor- bzw. nachgeschaltet werden.

Sofern hier von einer kurbelwellenabhängigen Steuerung gesprochen wird, so umfasst dies eine mechanische kurbelwellenabhängige Steuerung, z. B. über eine Nockenwelle, und jegliche andere Art von kurbelwellenabhängiger Steuerung, z. B. eine elektrische Steuerung, bei der z. B. über einen Kurbelwellensensor die Kurbelwellenposition erfasst wird und in Abhängigkeit von dem Sensorsignal kurbelwellenabhängig etwas gesteuert wird, z. B. die Betätigung elektrisch betätigbarer Ventile.

Soweit von einer mechanischen kurbelwellenabhängigen Steuerung die Rede ist, so erfasst dies z. B. eine Steuerung über eine Nockenwelle, wobei die Nockenbetätigung z.B. über mechanische Stößel oder Hydrostößel realisiert sein kann. Umfasst ist ferner eine elektrohydraulische Betätigung, derart, dass als elektrisch betätigbare Ventile Hydraulikventile eingesetzt werden, die in Folge einer elektrischen Betätigung einen Durchfluss, eine Absperrung oder eine Änderung der Strömung eines Hydraulikmediums erlauben.

Bei solchen Ausführungsformen, bei denen keine mechanische kurbelwellenabhängige Steuerung vorgesehen ist, sondern rein elektrisch betätigbare Ventile verwendet werden, erfolgt die kurbelwellenabhängige Steuerung durch entsprechend getaktete Betätigung dieser Ventile. Hierbei erfolgt die erfindungsgemäße Umschaltung zwischen dem Drucklufterzeugungsmodus und dem Druckluftexpansionsmodus durch eine Änderung der Ansteuersignale, d. h. z. B. durch eine Änderung der Taktung dieser Ventile. Hierfür ist in einem Steuerprogramm des elektronischen Steuergeräts hinterlegt, welche Art der Betätigung der elektrischen Ventile im jeweiligen Betriebsmodus notwendig ist.

Die nachfolgend näher erläuterten Möglichkeiten zur Realisierung der Erfindung mittels der elektrisch betätigbaren Ventile können wie folgt technisch untergliedert werden. Hierbei wird von einem Druckluftkompressor ausgegangen, der wie z. B. bei Kolbenkompressoren üblich ein Einlassventil (auch Ansaugventil oder Niederdruckventil genannt) und ein Auslassventil (auch Ausstoßventil oder Hochdruckventil genannt) für den Drucklufterzeugungsmodus aufweist. Zur Unterscheidung vom Druckluftexpansionsmodus seien diese Ventile auch als Kompressions-Einlassventil und als Kompressions-Auslassventil bezeichnet.
1. Druckluftkompressor bleibt unverändert:
   Einem zu dem Kompressions-Einlassventil führenden Einlassanschluss des Druckluftkompressors ist ein elektrisch betätigbares Ventil vorgeschaltet; einem zu dem Kompressions-Auslassventil führenden Auslassanschluss des Druckluftkompressors ist ein weiteres elektrisch betätigbares Ventil nachgeschaltet.
2. Druckluftkompressor wird verändert, wobei das Kompressions-Einlassventil und das Kompressions-Auslassventil unverändert bleiben:
   Es wird ein zusätzlicher Anschluss bzw. eine Anzapfung im Zylinderkopf des Druckluftkompressors derart vorgesehen, dass ein elektrisch betätigbares Ventil über den zusätzlichen Anschluss mit dem Kompressionsraum verbunden werden kann. Das anschließbare elektrisch betätigbare Ventil kann aus diskreten einzelnen Ventilen für eine Druckluft-Einlassfunktion im Druckluftexpansionsmodus (Expansions-Einlassventil) und für die Druckluft-Auslassfunktion im Druckluftexpansionsmodus (Expansions-Auslassventil) oder auch als kombiniertes Expansions-Einlass-/Auslassventil ausgebildet sein, z. B. in der Art eines 3-/2-Wege-Ventils. Die Expansions-Einlass- und Auslassventile können neben der elektrischen Betätigung auch eine Kurbelwellen-abhängige mechanische Betätigung z. B. über eine Nockenwelle aufweisen.
3. Druckluftkompressor wird auch hinsichtlich des Kompressions-Einlassventils und/oder des Kompressions-Auslassventils verändert:
   a) Das Kompressions-Einlassventil und das Kompressions-Auslassventil des Druckluftkompressors werden durch elektrisch steuerbare Einlass- und Auslassventile ersetzt, mit denen durch elektronische Steuerung sowohl der Drucklufterzeugungsmodus als auch der Druckluftexpansionsmodus realisiert wird.
   b) Es werden mechanisch kurbelwellengesteuerte Einlassventile und Auslassventile vorgesehen, die durch elektrische Betätigung in einer geöffneten oder geschlossenen Stellung feststellbar sind. Durch die mechanisch kurbelwellengesteuerte Einlassventile und Auslassventile wird sowohl der Drucklufterzeugungsmodus als auch der Druckluftexpansionsmodus realisiert.
   c) Der Druckluftkompressor wird mit zusätzlichen mechanisch kurbelwellengesteuerten Expansions-Einlass- und Expansions-Auslassventilen versehen, die über elektrisch betätigbare Ventile dann mit dem Druckluftspeicher bzw. der Atmosphäre verbindbar sind.

Vorteilhaft sind auch Kombinationen der zuvor genannten Ausführungsformen realisierbar. So kann bei den vorgenannten Ausführungsformen a) bis c) beispielsweise auch das Kompressions-Einlassventil des Druckluftkompressors unverändert beibehalten werden. Es wird dann ein zusätzliches kurbelwellengesteuertes Expansions-Auslassventil ergänzt, das über ein elektrisch betätigbares Ventil mit der Atmosphäre verbindbar ist. Zusätzlich kann das vorhandene Kompressions-Auslassventil des Druckluftkompressors beibehalten werden, aber zusätzlich kurbelwellenabhängig gesteuert werden.

Vorteilhaft erkennt eine Drucksteuereinrichtung, z. B. mittels eines elektronischen Steuergeräts, ob ein erhöhter Antriebskraft-Bedarf im Betrieb des Fahrzeugs vorliegt, z. B. wenn das Fahrzeug beschleunigt werden soll oder bei Bergauffahrt. In diesem Fall sorgt die Drucksteuereinrichtung dafür, dass der Druckluftkompressor in einem Druckluftexpansionsmodus betrieben wird. Im Druckluftexpansionsmodus wird der Antriebsmotor durch Druckluftbeaufschlagung des Druckluftkompressors mit Druckluft aus der Druckluftversorgungs- und Speicheranlage unterstützt. Vorteilhaft erkennt die Drucksteuereinrichtung zudem Schubphasen im Betrieb des Fahrzeugs. Eine Schubphase wird z. B. erkannt, wenn der Fahrer das Fahrzeug verzögern will oder bei Bergabfahrt. Bei Vorliegen einer Schubphase wird durch die Drucksteuereinrichtung der Druckluftkompressor automatisch in einem Drucklufterzeugungsmodus betrieben, in dem der Druckluftkompressor Druckluft in die Druckluftversorgungs- und Speicheranlage fördert. Auf diese Weise können während der Schubphasen im Betrieb des Fahrzeuges die Druckluftentnahmen aus der Druckluftversorgungs- und Speicheranlage, die während der Phasen des erhöhten Antriebskraft-Bedarfs vorgenommen wurden, kompensiert werden. Hierdurch wird ein besonders Energie sparender Betrieb des Fahrzeugs ermöglicht.

Der Druckluftkompressor kann durch die Drucksteuereinrichtung zusätzlich in einen Leerlaufmodus geschaltet werden, in dem weder Druckluft erzeugt noch im Druckluftexpansionsmodus verbraucht wird. Der Leerlaufmodus ist sozusagen als dritter Betriebsmodus neben dem Drucklufterzeugungsmodus und dem Druckluftexpansionsmodus vorgesehen. Bekannt sind z. B. die Verwendung eines zuschaltbaren Totraums bei einem Einzylinder-Druckluftkompressor, das Verbinden der Druckräume bei einem Mehrzylinder-Druckluftkompressor oder die Abkopplung des Druckluftkompressors vom Antriebsmotor mittels einer schaltbaren Kupplung.

Gemäß einer vorteilhaften Weiterbildung der Erfindung ist die Drucksteuereinrichtung dazu eingerichtet, bei Verwendung eines über eine Schaltkupplung vom Fahrzeugmotor abtrennbaren Druckluftkompressors diesen automatisch mit dem Antriebsmotor zu verbinden, wenn der Druckluftkompressor in dem Drucklufterzeugungsmodus oder in dem Druckluftexpansionsmodus betrieben wird.

Gemäß einer vorteilhaften Weiterbildung der Erfindung weist die Ventileinrichtung ein Verbindungsventil auf, das zum direkten Verbinden zweier Kompressionsräume eines Mehrzylinder-Druckluftkompressors eingerichtet ist. Die Drucksteuereinrichtung ist ferner dazu eingerichtet, in dem Leerlaufmodus das Verbindungsventil zu öffnen, wodurch die an das Verbindungsventil angeschlossenen Kompressionsräume miteinander verbunden sind. Durch Öffnen des Verbindungsventils wird eine Verbindung zwischen den angeschlossenen Kompressionsräumen hergestellt, was z. B. bei einem üblichen Zweizylinderkompressor dazu führt, dass die in den Kompressionsräumen vorhandene Luft beim Aufwärtshub des einen Kolbens in den jeweils anderen Kompressionsraum gepresst wird und umgekehrt. Vorteilhaft sind bei solchen Mehrzylinderkompressoren die Kolben durch entsprechende Ausgestaltung der Kurbelwelle gegenläufig zueinander angeordnet, derart, dass beim Aufwärtshub des einen Kolbens der jeweils andere, benachbarte Kolben einen Abwärtshub ausführt.

Gemäß einer vorteilhaften Weiterbildung der Erfindung sind alle oder wenigstens ein Teil der elektrisch betätigbaren Ventile als piezoelektrisch, elektromagnetisch, elektromotorisch, elektropneumatisch oder elektrohydraulisch betätigbare Ventile ausgebildet. Hierbei ist insbesondere für diejenigen der zuvor genannten Realisierungsformen, bei denen keinerlei mechanische kurbelwellenabhängige Steuerung vorgesehen ist, die Verwendung von piezoelektrisch betätigbaren Ventilen besonders vorteilhaft, da diese besonders kurze Ansprech- und Reaktionszeiten mit relativ großen realisierbaren Durchlassquerschnitten für die Druckluft erlauben.

Gemäß einer vorteilhaften Weiterbildung der Erfindung sind alle oder wenigstens ein Teil der elektrisch betätigbaren Ventile in den Zylinder des Druckluftkompressors integriert. Als besonders vorteilhaft hat sich die Integration der Ventile in den Zylinderkopf herausgestellt. Gemäß einer vorteilhaften Weiterbildung der Erfindung sind alle oder wenigstens ein Teil der elektrisch betätigbaren Ventile in das Kurbelgehäuse des Druckluftkompressors integriert. Dies hat den Vorteil, dass der Druckluftkompressor zusammen mit den elektrisch betätigbaren Ventilen als robuste und kompakte Einheit ausgebildet werden kann, die zudem Bauraum-sparend konstruiert werden kann. Ein weiterer Vorteil besteht darin, dass die elektrisch betätigbaren Ventile in unmittelbarer Nähe zu ihrem jeweiligen Einsatzort angeordnet werden können, sodass infolge kurzer Strömungswege und kleiner Strömungsvolumina schnelle Ansprechzeiten realisiert werden können.

Gemäß einer vorteilhaften Weiterbildung der Erfindung sind alle oder wenigstens ein Teil der elektrisch betätigbaren Ventile dem Einlassanschluss des Druckluftkompressors vorgeschaltet. Gemäß einer vorteilhaften Weiterbildung der Erfindung sind alle oder wenigstens ein Teil der elektrisch betätigbaren Ventile dem Auslassanschluss des Druckluftkompressors nachgeschaltet. Dies hat den Vorteil, dass die Erfindung mit handelsüblichen Druckluftkompressoren realisiert werden kann, wobei diese entweder gar nicht verändert werden müssen oder nur geringfügig. Hierdurch wird auch eine einfache und kostengünstige Nachrüstmöglichkeit der Erfindung bei bestehenden Druckluftanlagen geschaffen.

Gemäß einer vorteilhaften Weiterbildung der Erfindung ist die Ventileinrichtung mit einer zusätzlichen Anzapfung des Kompressionsraums des Druckluftkompressors verbunden. Dies erlaubt ebenfalls eine einfache und kostengünstige Realisierung der Erfindung in Kombination mit vorhandenen, käuflich erhältlichen Druckluftkompressoren und somit eine einfache Nachrüstmöglichkeit für die Erfindung. Die Anzapfung kann z. B. in Form einer Bohrung am Zylinderkopf vorgesehen sein. An diese Bohrung wird dann die Ventileinrichtung angeschlossen.

Gemäß einer vorteilhaften Weiterbildung der Erfindung ist das Volumen des Kompressionsraums zeitlich variabel. Damit ist nicht etwa gemeint, dass der Kompressor oder ein Teil davon, z. B. der Zylinder, zeitlich seine Form verändert, sondern beispielsweise bei einem Kolbenkompressor eine Aufwärts- und eine Abwärtsbewegung des Kolbens. In einer Volumenverringerungsphase nimmt das Volumen zeitlich ab, während in einer Volumenvergrößerungsphase das Volumen zeitlich zunimmt. Die Drucksteuereinrichtung ist dazu eingerichtet, in dem Druckluftexpansionsmodus den Kompressionsraum während einer Volumenvergrößerungsphase mit der Druckluftversorgungs- und Speicheranlage zu verbinden und während einer Volumenverringerungsphase mit der Atmosphäre zu verbinden. Hierdurch wird der Kompressionsraum im Druckluftexpansionsmodus in der Volumenverringerungsphase entlastet. Die zuvor während einer Volumenvergrößerungsphase in den Kompressionsraum eingesteuerte Druckluft kann somit in die Atmosphäre entlassen werden. Der Druckluftkompressor wird damit im Druckluftexpansionsmodus sozusagen "umgekehrt" betrieben wie im Drucklufterzeugungsmodus. Im Drucklufterzeugungsmodus wird vorteilhaft Druckluft während der Volumenvergrößerungsphase aus der Atmosphäre angesaugt und in einer Volumenverringerungsphase Druckluft an die Druckluftversorgungs- und Speicheranlage abgegeben.

Gemäß einer vorteilhaften Weiterbildung der Erfindung ist vorgesehen, dass die Verbindung des Kompressionsraums mit der Druckluftversorgungs- und Speicheranlage im Druckluftexpansionsmodus nur während eines Teils der Volumenvergrößerungsphase hergestellt ist. Hierdurch kann die Effizienz des Druckluftkompressors als Unterstützung des Antriebs des Fahrzeugs hinsichtlich des Energieverbrauchs optimiert werden. Insbesondere wird hierdurch nur so viel Druckluft verbraucht, wie für einen möglichst wirtschaftlichen Einsatz sinnvoll und erforderlich ist.

Gemäß einer vorteilhaften Weiterbildung der Erfindung ist im Druckluftexpansionsmodus die Verbindung des Kompressionsraums mit der Druckluftversorgungs- und Speicheranlage unmittelbar mit Beginn der Volumenvergrößerungsphase hergestellt. Bei einem Kolbenkompressor bedeutet dies, dass der Kompressionsraum ab Erreichen des oberen Totpunkts des Kolbens mit der Druckluftversorgungs- und Speicheranlage verbunden ist.

Gemäß einer vorteilhaften Weiterbildung der Erfindung ist im Druckluftexpansionsmodus die Verbindung des Kompressionsraums mit der Druckluftversorgungs- und Speicheranlage nur während der halben Dauer der Volumenvergrößerungsphase hergestellt. Hierdurch kann der Druckluftverbrauch minimiert werden und damit die Energieeffizienz der Einrichtung gesteigert werden. Eine weitere Verringerung des Druckluftverbrauchs kann vorteilhaft erreicht werden, wenn die Verbindung nur während eines Viertels der Volumenvergrößerungsphase hergestellt wird. Eine weitere Verringerung des Druckluftverbrauchs ist vorteilhaft möglich, wenn die Verbindung nur während eines Achtels der Volumenvergrößerungsphase hergestellt wird. Das Expansions-Auslassventil wird dabei während einer kompletten Halbdrehung der Kurbelwelle vom unteren Totpunkt bis hin zum oberen Totpunkt geöffnet gehalten. Dementsprechend werden die Steuerzeiten für die kurbelwellenabhängige Steuerung des Expansions-Einlassventils und des Expansions-Auslassventils eingestellt.

Konsequent ist in einer vorteilhaften Weiterbildung der Erfindung die Drucksteuereinrichtung dazu eingerichtet, in dem Drucklufterzeugungsmodus den Kompressionsraum während einer Volumenverringerungsphase mit der Druckluftversorgungs- und Speicheranlage zu verbinden, insbesondere wenn der Druck im Kompressionsraum größer ist als der Druck in der Druckluftversorgungs- und Speicheranlage, und den Kompressionsraum während einer Volumenvergrößerungsphase mit der Atmosphäre zu verbinden, insbesondere wenn der Druck im Kompressionsraum kleiner ist als der Atmosphären-Druck. Für die Realisierung des Drucklufterzeugungsmodus kann vorteilhaft eine Anordnung von einem Kompressions-Einlassventil und einem Kompressions-Auslassventil, die z. B. im Kompressor-Zylinderkopf angeordnet sind, vorgesehen werden. Das Kompressions-Einlassventil und das Kompressions-Auslassventil können vorteilhaft als Rückschlagventil ausgebildet sein, z. B. als Lamellenventil.

Wie zuvor beschrieben, kann in dem Drucklufterzeugungsmodus die jeweilige Verbindung des Kompressionsraums mit der Atmosphäre bzw. mit der Druckluftversorgungs- und Speicheranlage rein überdruck- bzw. unterdruckgesteuert durchgeführt werden. In einer vorteilhaften Ausgestaltung der Erfindung erfolgt die Steuerung dieser Verbindungen kurbelwellenabhängig, z. B. über eine Nockenwelle oder durch ein elektronisches Steuergerät. In einer vorteilhaften Ausgestaltung wird hierbei das Kompressions-Einlassventil während einer kompletten Halbdrehung zwischen dem oberen Totpunkt hin zum unteren Totpunkt des Kolbens geöffnet. In einer vorteilhaften Ausgestaltung wird das Kompressions-Auslassventil nicht vollständig während einer halben Kurbelwellendrehung geöffnet, sondern lediglich während eines Teils, insbesondere während der letzten Hälfte der Kurbelwellendrehung vor Erreichen des oberen Totpunkts, oder nur während der letzten 35° der Drehung vor Erreichen des oberen Totpunkts.

Gemäß einer vorteilhaften Weiterbildung der Erfindung ist in dem Druckluftexpansionsmodus die Menge an Druckluft durch die Drucksteuereinrichtung synchron zur Drehung der Antriebswelle des Druckluftkompressors in den Kompressionsraum einsteuerbar. Hierdurch kann eine optimale Effizienz der Antriebskraft-Unterstützung und eine präzise Synchronität zur Drehung einer Abtriebswelle des Antriebsmotors gewährleistet werden.

Gemäß einer vorteilhaften Weiterbildung der Erfindung weist die Drucksteuereinrichtung eine Ventileinrichtung mit einem Belüftungspfad und einem Entlüftungspfad zur Be- und Entlüftung des Kompressionsraums des Druckluftkompressors auf. Der Belüftungspfad und der Entlüftungspfad sind mit dem Kompressionsraum verbunden oder verbindbar. Der Belüftungspfad ist mit der Druckluftversorgungs- und Speicheranlage verbindbar, der Entlüftungspfad mit der Atmosphäre. Vorteilhaft ist die Ventileinrichtung über eine mit der Abtriebswelle des Antriebsmotors verbundene oder verbindbare Nockenwelle mechanisch betätigbar. Hierdurch kann die bei Verbrennungsmotoren bewährte Nockenwellensteuerung auch zur Steuerung des Druckluftkompressors in dem Druckluftexpansionsmodus herangezogen werden. Nockenwellensteuerungen können vorteilhaft sehr robust und langlebig ausgeführt werden. Vorteilhaft kann die Nockenwelle fest mit der Abtriebswelle des Antriebsmotors verbunden sein oder, z.B. über eine betätigbare Kupplung, zeitweise mit der Abtriebswelle des Antriebsmotors verbindbar sein. Vorteilhaft kann die Nockenwelle z.B. durch Anordnung von Nocken auf der Kurbelwelle des Druckluftkompressors realisiert sein. Es ist auch vorteilhaft möglich, eine separate, mit der Kurbelwelle des Druckluftkompressors bzw. der Abtriebswelle des Antriebsmotors verbundene Nockenwelle vorzusehen.

Gemäß einer vorteilhaften Weiterbildung der Erfindung weist die Ventileinrichtung wenigstens ein elektrisch betätigbares Magnetventil auf. Zudem ist eine elektronische Steuereinrichtung zur Steuerung des Magnetventils vorgesehen. Durch die Ausführung als Magnetventil ist ebenfalls eine vorteilhafte Steuerung des Druckluftkompressors im Druckluftexpansionsmodus möglich, wobei auf bewährte Magnetventil-Technologie zurückgegriffen werden kann, z. B. auf langlebige Magnetventile aus dem Bereich von Antiblockiersystemen. Die Verwendung einer elektronischen Steuereinrichtung hat den Vorteil, dass die Erkennung der Schubphasen und der Phasen mit erhöhtem Antriebskraft-Bedarf in einer einzigen Steuerung integriert werden kann, zusammen mit der Steuerung des Druckluftkompressors über das Magnetventil. Die Steuerung kann vorteilhaft als Steuerprogramm für einen in der elektronischen Steuereinrichtung vorgesehenen Mikroprozessor realisiert werden.

Gemäß einer vorteilhaften Weiterbildung der Erfindung wird der elektronischen Steuereinrichtung der Drucksteuereinrichtung ein Signal von einem Sensor zugeführt, über das die Lage der Kurbelwelle des Druckluftkompressors bzw., bei entsprechender Kalibrierung bezüglich der Lage der Kurbelwelle des Antriebsmotors, alternativ auch dessen Kurbelwellenposition erfasst wird. Das Signal kann der elektronischen Steuereinrichtung vorteilhaft direkt von einem entsprechenden induktiven, optischen oder sonstigen geeigneten Sensor zugeführt werden. Die elektronische Steuereinrichtung verwendet das die Lage der Kurbelwelle angebenden Signal dann zur phasenrichtigen Steuerung der elektrisch betätigbaren Ventile der Ventileinrichtung.

Gemäß einer vorteilhaften Weiterbildung der Erfindung empfängt die elektronische Steuereinrichtung von einem Motorsteuergerät eine Information über die Winkellage der Abtriebswelle des Fahrzeugmotors. Das Motorsteuergerät dient dabei zur Steuerung des Antriebsmotors des Fahrzeuges. Bekannte Motorsteuergeräte weisen ohnehin beispielsweise über Sensoren ermittelte Informationen über die Winkellage der Abtriebswelle des Fahrzeugmotors auf. Durch Verbindung der elektronischen Steuereinrichtung mit dem Motorsteuergerät, z. B. über einen in dem Fahrzeug vorgesehenen Datenbus, kann auf kostengünstige Weise eine Information über die Winkellage der Abtriebswelle des Fahrzeugmotors in der elektronischen Steuereinrichtung empfangen werden und für eine Steuerung des Magnetventils im Druckluftexpansionsmodus des Druckluftkompressors verwendet werden.

Da die Winkellage der Abtriebswelle des Fahrzeugmotors zur Winkellage der Kurbelwelle des Kompressors aufgrund der Montage von Fahrzeug zu Fahrzeug unterschiedlich sein kann, kann gemäß einer vorteilhaften Weiterbildung der Erfindung diese relative Lage von einer elektronischen Steuereinrichtung ermittelt und kompensiert werden. Hierzu werden über wenigstens einen im Fahrzeug vorhandenen Drucksensor die Druckspitzen in der Druckluftanlage aufgrund des Kompressionsvorgangs zeitlich ausgewertet. Hieraus wird als Korrekturwert eine Winkeldifferenz zwischen der Winkellage der Kurbelwelle des Druckluftkompressors und der Winkellage der Abtriebswelle bestimmt. Nachfolgend verwendet die elektronische Steuereinrichtung den errechneten Korrekturwert für die phasenrichtige Steuerung der Ventileinrichtung.

Gemäß einer vorteilhaften Weiterbildung der Erfindung weist die Drucksteuereinrichtung ein weiteres Ventil auf, über das ein Kurbelgehäuse des Druckluftkompressors mit Druckluft beaufschlagbar ist. Hierdurch ist eine weitere Steigerung der Effizienz der Erfindung zur Antriebsunterstützung des Fahrzeugs möglich. Durch eine Druckbeaufschlagung des Kurbelgehäuses kann die Unterstützung des Antriebsmotors über ein zusätzliches Drehmoment von dem Druckluftkompressor auch in den Volumenverringerungsphasen erfolgen. Ein Kolben des Druckluftkompressors kann somit je nach Betriebsphase (Aufwärtsbewegung, Abwärtsbewegung) mal von der einen Seite, mal von der anderen Seite mit Druckluft beaufschlagt werden. Auf diese Weise ist eine nahezu permanente Unterstützung des Antriebsmotors durch den Druckluftkompressor während der gesamten Umdrehung der Antriebswelle des Druckluftkompressors möglich. Die Ventileinrichtung zur Druckluft-Beaufschlagung des Kompressionsraums wird dabei phasenkomplementär zur weiteren Ventileinrichtung zur Druckluftbeaufschlagung des Kurbelgehäuses betrieben. Mit anderen Worten, wenn der Kompressionsraum über die Ventileinrichtung mit dem Druckluftspeicher verbunden ist, ist das Kurbelgehäuse mit der Atmosphäre verbunden. Bei Druckluftbeaufschlagung des Kurbelgehäuses von dem Druckluftspeicher ist der Kompressionsraum mit der Atmosphäre verbunden.

Die Erfindung betrifft außerdem eine vorteilhafte Fahrzeug-Druckluftanlage mit einer Drucksteuereinrichtung und einem Druckluftkompressor der zuvor beschriebenen Art. Gemäß einer vorteilhaften Weiterbildung weist die Fahrzeug-Druckluftanlage einen Wärmetauscher auf, der einerseits mit dem Antriebsmotor oder mit von dem Antriebsmotor erwärmten Teilen des Fahrzeugs thermisch gekoppelt ist. Der Wärmetauscher ist andererseits mit Teilen der Druckluftversorgungs- und Speicheranlage zur Abgabe der von dem Antriebsmotor oder von der von dem Antriebsmotor erwärmten Teilen aufgenommenen Wärme thermisch gekoppelt, so dass an die Druckluft in der Druckluftversorgungs- und Speicheranlage Wärme abgegeben werden kann und somit die Druckluft aufgeheizt werden kann. Zur Aufnahme der Wärme kann der Wärmetauscher direkt mit dem Antriebsmotor oder damit verbundenen Teilen gekoppelt sein, z. B. mit der Auspuffanlage oder dem Katalysator. Dies hat den Vorteil, dass die Abwärme des Antriebsmotors zur weiteren Steigerung der Energieeffizienz der Fahrzeug-Druckluftanlage verwendet werden kann. Hierdurch wird der Druckluft weitere Energie zugeführt, die bei einer Verwendung der Druckluft im Druckluftexpansionsmodus oder bei einer sonstigen Verwendung der Druckluft in der Druckluftanlage, z. B. zur Abbremsung des Fahrzeugs, genutzt werden kann. Insbesondere kann durch die Wärmeabgabe an die Druckluft der verfügbare Druck in dem Druckluftspeicher bzw. anderen Teilen der Druckluftanlage erhöht werden, so dass Druckluft auf einem höheren Niveau zur Verfügung steht und entsprechend verwendet werden kann.

Gemäß einer vorteilhaften Weiterbildung der Erfindung ist die Drucksteuereinrichtung dazu eingerichtet, die Wärmeabgabe an die Druckluftversorgungs- und Speicheranlage nur dann zuzulassen, wenn der Drucklufterzeugungsmodus nicht aktiviert ist. Dies hat den Vorteil, dass im Drucklufterzeugungsmodus der Druckluftkompressor nicht gegen einen schon durch die zugeführte Wärme erhöhten Gegendruck fördern muss, was wiederum den Vorteil hat, dass der Energieeinsatz zum Antreiben des Druckluftkompressors geringer ist und zudem der Verschleiß des Druckluftkompressors geringer ausfällt. Die Drucksteuereinrichtung kann hierzu mit einem weiteren, z. B. elektrisch betätigbaren, Ventil ausgestattet sein, über das ein Wärmefluidkreislauf durch den Wärmetauscher zeitweise abgesperrt werden kann. Alternativ kann hierzu auch eine Pumpe, die zur Förderung des Wärmefluids vorgesehen ist, abgeschaltet werden.

Die Erfindung betrifft außerdem einen vorteilhaften Druckluftkompressor für eine solche Fahrzeug-Druckluftanlage.

Außerdem betrifft die Erfindung ein Verfahren zur Drucksteuerung in einem Fahrzeug, wobei das Fahrzeug wenigstens einen Antriebsmotor zur Erzeugung einer Antriebskraft des Fahrzeuges, eine Druckluftversorgungs- und Speicheranlage und einen mit dem Antriebsmotor des Fahrzeugs gekoppelten oder koppelbaren Druckluftkompressor aufweist, mit den Merkmalen:
a) in einem Drucklufterzeugungsmodus wird Druckluft von einem Kompressionsraum des Druckluftkompressors in die Druckluftversorgungs- und Speicheranlage geleitet,
b) in einem Druckluftexpansionsmodus wird Druckluft von der Druckluftversorgungs- und Speicheranlage in den Kompressionsraum geleitet,
c) die Umschaltung von dem Drucklufterzeugungsmodus in den Druckluftexpansionsmodus und umgekehrt erfolgt durch elektrische Betätigung einer oder mehrerer elektrisch betätigbarer Ventile der Ventileinrichtung durch ein elektronisches Steuergerät.

Gemäß einer vorteilhaften Weiterbildung der Erfindung wird bei einer Schubphase im Betrieb des Fahrzeugs der Druckluftkompressor im Drucklufterzeugungsmodus betrieben und/oder in einer Phase mit erhöhtem Antriebskraftbedarf im Betrieb des Fahrzeugs der Druckluftkompressor im Druckluftexpansionsmodus betrieben.

Vorteilhaft können die elektronische Steuereinrichtung sowie ein ggf. erforderlicher Drucksensor als Teil einer EAPU ausgebildet sein. Eine EAPU ist eine elektronisch gesteuerte Luftaufbereitungseinheit für ein mit einer Druckluftanlage versehenes Fahrzeug. Hierbei kann insbesondere die Steuerungsfunktion der Drucksteuereinrichtung in Form eines Programmteils in der Steuerungssoftware der EAPU realisiert sein.

Die Erfindung wird nachfolgend anhand von Ausführungsbeispielen unter Verwendung von Zeichnungen näher erläutert.

Es zeigen
- Figur 1 -: ein Fahrzeug in schematischer Darstellung und
- Figuren 2 bis 8 -: die für die Beschreibung der Erfindung relevanten Druckluft-Komponenten des Fahrzeugs zusammen mit verschiedenen Ausführungsformen der Drucksteuereinrichtung und
- Figuren 9 und 10: Ventilsteuerzeiten der Drucksteuereinrichtung.

In den Figuren werden gleiche Bezugszeichen für einander entsprechende Elemente verwendet.

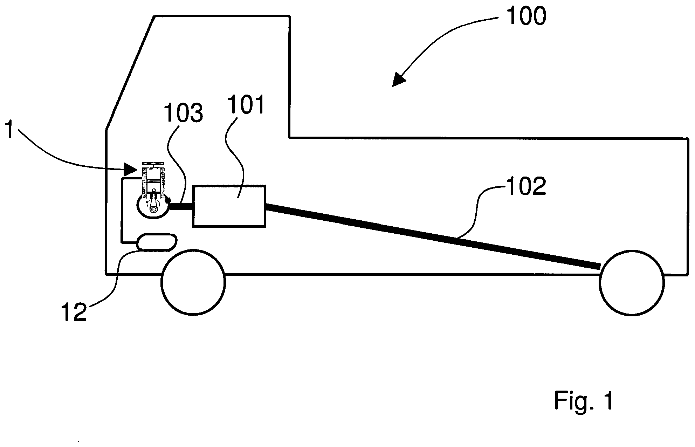

In der Figur 1 ist ein Fahrzeug 100 dargestellt, das einen Antriebsmotor 101, z. B. einen Dieselmotor, aufweist, der über eine kardanisch mit der Hinterachse des Fahrzeugs verbundene Antriebswelle 102 eine Antriebskraft zum Antrieb des Fahrzeugs 100 erbringen kann. Der Antriebsmotor 101 ist über eine Welle 103 mit einem Druckluftkompressor 1 des Fahrzeugs 100 verbunden. Die Welle 103 ist zugleich Abtriebswelle des Antriebsmotors 101 und Antriebswelle des Druckluftkompressors 1. Je nach Ausführung kann auch eine Übersetzung zwischen dem Antriebsmotor und dem Druckluftkompressor mittels eines Getriebes vorgesehen sein. Der Druckluftkompressor 1 ist zudem über eine Druckluftleitung mit einer Druckluftversorgungs- und Speicheranlage des Fahrzeugs 100 verbunden, die in den Figuren durch einen Druckluftspeicher 12 symbolisiert wird. Die Druckluftversorgungs- und Speicheranlage weist beispielsweise ein Mehrkreisschutzventil, einen Lufttrockner und einen Druckluftspeicher in Form eines überdruckfesten Behälters auf.

Soweit die dargestellten elektrisch betätigbaren Ventile in den Figuren mit einem Symbol für einen Magneten dargestellt sind, so seien hiermit alle Arten elektrischer Betätigung erfasst, insbesondere piezoelektrische, elektromagnetische, elektrohydraulische, elektropneumatische und elektromotorische Betätigung.

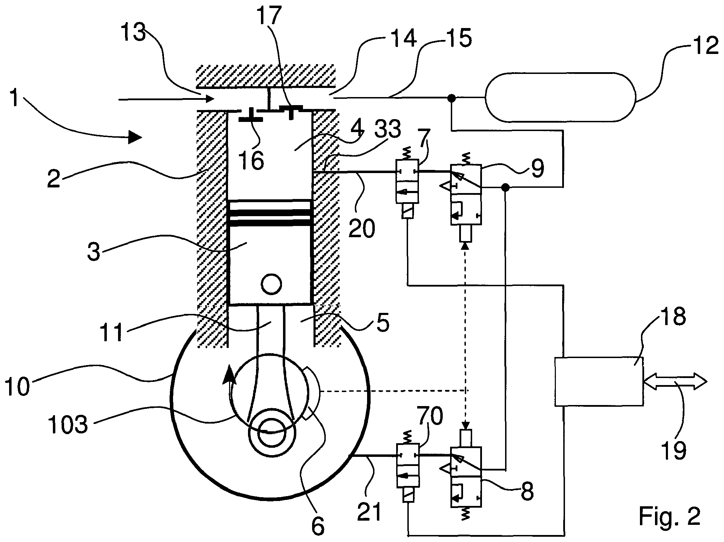

Die Figur 2 zeigt in schematischer Darstellung den Druckluftkompressor 1, welcher als Ein- oder Mehrzylinderdruckluftkompressor ausgebildet sein kann, sowie die Druckluftversorgungs- und Speicheranlage, symbolisiert durch den Druckluftspeicher 12. Der Druckluftkompressor 1 ist als üblicher Kolbenkompressor ausgeführt. Der Druckluftkompressor 1 weist einen Zylinder 2 sowie einen darin befindlichen Kolben 3 auf. Unterhalb des Zylinders 2 weist der Druckluftkompressor 1 ein Kurbelgehäuse 10 auf, in dem ein Pleuelantrieb für den Kolben 3 vorgesehen ist. Der Pleuelantrieb weist ein mit der Antriebswelle 103 des Druckluftkompressors 1 verbundenes Pleuel 11 auf, das an einer Seite mit dem Kolben 3 und an der anderen Seite mit einem Pleuelzapfen an der Antriebswelle 103 verbunden ist. Bei einer Drehung der Antriebswelle 103 wird der Kolben 3 über den Pleuelantrieb in eine zyklische Aufwärts- und Abwärtsbewegung versetzt.

Der Kolben 3 teilt den Druckluftkompressor 1 in einen Kompressionsraum 4 und in einen davon druckmittelseitig getrennten Kurbelwellen-Raum auf, der druckmittelseitig mit dem Innenraum 5 des Kurbelgehäuses 10 verbunden ist. Bei einer Abwärtsbewegung des Kolbens 3 wird das Volumen des Kompressionsraums 4 vergrößert. Der Druckluftkompressor befindet sich dann in einer Volumenvergrößerungsphase, in der Luft aus der Atmosphäre über einen Einlassanschluss 13 angesaugt wird und über ein als Ansaugventil dienendes Kompressions-Einlassventil 16 in den Kompressionsraum 4 gelangt. Das Kompressions-Einlassventil 16 kann als Rückschlagventil ausgebildet werden, das in Folge eines Unterdrucks in dem Kompressionsraum 4, verglichen mit Atmosphärendruck, selbstständig öffnet und bei einem Überdruck selbsttätig schließt.

Bei einer Aufwärtsbewegung des Kolbens 3 verringert sich das Volumen des Kompressionsraums 4. Die darin befindliche Luft wird komprimiert. Bei Erreichen eines Drucks im Kompressionsraum 4, der höher als der Druck in dem angeschlossenen Druckluftspeicher 12 ist, öffnet ein ebenfalls als Rückschlagventil ausgebildetes Kompressions-Auslassventil 17. Hierüber wird die komprimierte Druckluft von dem Kompressionsraum 4 zu einem Auslassanschluss 14 des Druckluftkompressors 1 geführt und gelangt über eine Druckluftleitung 15 in den Druckluftspeicher 12. In einer Volumenvergrößerungsphase schließt das Kompressions-Auslassventil 17 selbsttätig auf Grund des im Kompressionsraum 4 vorliegenden Unterdrucks, verglichen mit dem Druck am Auslassanschluss 14 des Druckluftkompressors 1.

In der Figur 2 ist zudem als Teil einer Drucksteuereinrichtung eine elektronische Steuereinrichtung dargestellt, die als elektronisches Steuergerät 18 ausgeführt ist. Das elektronische Steuergerät 18 ist über eine Datenverbindung 19, z. B. einen Datenbus in Form eines CAN-Busses, mit weiteren elektronischen Einrichtungen in dem Fahrzeug verbunden. Insbesondere kann das elektronische Steuergerät 18 mit einem Motorsteuergerät des Antriebsmotors des Fahrzeugs verbunden sein. Das elektronische Steuergerät 18 ist mit einem ersten elektrisch betätigbaren Ventil 7, das als Magnetventil in Form eines 2/2-Wegeventils ausgebildet ist, über eine elektrische Leitung verbunden. Das erste elektrisch betätigbare Ventil 7 ist über eine Druckluftleitung 20 mit einer Anzapfung 33 des Kompressionsraums 4 verbunden. Die Anzapfung 33 kann z.B. als Bohrung im Zylinder 2 des Druckluftkompressors ausgebildet sein. Das erste elektrisch betätigbare Ventil 7 kann von dem elektronischen Steuergerät 18 von der in Figur 2 dargestellten Sperrstellung in eine Durchlassstellung geschaltet werden. In der Durchlassstellung verbindet das erste elektrisch betätigbare Ventil 7 den Kompressionsraum 4 mit einem ersten mechanisch betätigbaren Ventil 9 der dargestellten Ventileinrichtung 7, 8, 9, 70. In der Sperrstellung trennt das erste elektrisch betätigbare Ventil 7 diese Verbindung. Das elektronische Steuergerät 18 ist außerdem mit einem zweiten elektrisch betätigbaren Ventil 70, das als Magnetventil in Form eines 2/2-Wegeventils ausgebildet ist, über eine elektrische Leitung verbunden. Das zweite elektrisch betätigbare Ventil 70 kann von dem elektronischen Steuergerät 18 von der in Figur 2 dargestellten Sperrstellung in eine Durchlassstellung geschaltet werden. In der Durchlassstellung verbindet das zweite elektrisch betätigbare Ventil 70 den Innenraum 5 des Kurbelgehäuses 10 mit einem zweiten mechanisch betätigbaren Ventil 8 der dargestellten Ventileinrichtung 7, 8, 9, 70. In der Sperrstellung trennt das zweite elektrisch betätigbare Ventil 70 diese Verbindung.

Das erste mechanisch betätigbare Ventil 9 ist als mechanisch betätigbares 3/2-Wegeventil ausgebildet. In einer Belüftungsstellung, die in der Figur 2 dargestellt ist, verbindet das erste mechanisch betätigbare Ventil 9 den Kompressionsraum 4 über eine Druckluftleitung 20 mit dem Druckluftspeicher 12, sofern das erste elektrisch betätigbare Ventil 7 in der Durchlassstellung steht. In einer Entlüftungsstellung verbindet das erste mechanisch betätigbare Ventil 9 den Kompressionsraum 4 über die Druckluftleitung 20 mit der Atmosphäre, sofern das erste elektrisch betätigbare Ventil 7 in der Durchlassstellung steht.

Das zweite mechanisch betätigbare Ventil 8 ist ebenfalls als mechanisch betätigbares 3/2-Wegeventil ausgeführt. Das zweite mechanisch betätigbare Ventil 8 ist über eine Druckluftleitung 21 mit dem Innenraum 5 des Kurbelgehäuses 10 verbunden. Das zweite mechanisch betätigbare Ventil 8 weist eine vergleichbare Funktion wie das erste mechanisch betätigbare Ventil 9 auf, nämlich eine Verbindung des Kurbelgehäuses 10 wahlweise mit dem Druckluftspeicher 12 oder mit der Atmosphäre, sofern das zweite elektrisch betätigbare Ventil 70 in der Durchlassstellung steht.

Das erste und das zweite mechanisch betätigbare Ventile 8, 9 werden mechanisch über eine Nockenwellen-Steuerung betätigt. An der Antriebswelle 103 des Druckluftkompressors 1 ist symbolisch ein Nocken 6 dargestellt. Durch gestrichelte Linien von dem Nocken 6 zu mechanischen Betätigungselementen der mechanisch betätigbaren Ventile 8, 9 ist die Nockenwellensteuerung dargestellt. Die Nockenwellensteuerung ist derart ausgeführt, dass die mechanisch betätigbaren Ventile 8, 9 phasenkomplementär betätigt werden, d. h. bei mechanisch betätigtem ersten mechanisch betätigbaren Ventil 9 ist das zweite mechanisch betätigbare Ventil 8 unbetätigt. Bei mechanisch betätigtem zweiten mechanisch betätigbaren Ventil 8 ist das erste mechanisch betätigbare Ventil 9 unbetätigt. Hierdurch wird in dem Druckluftexpansionsmodus wechselweise der Kompressionsraum 4 und der Innenraum 5 des Kurbelgehäuses 10 mit Druckluft aus dem Druckluftspeicher 12 beaufschlagt.

Das elektronische Steuergerät 18 schaltet das erste und das zweite elektrisch betätigbare Ventil 7, 70 in dem Druckluftexpansionsmodus in die Durchlassstellung und in dem Drucklufterzeugungsmodus in die Sperrstellung.

Wie erkennbar ist, umfasst die Drucksteuereinrichtung in der Ausführungsform gemäß Figur 2 das elektronische Steuergerät 18 und eine aus den elektrisch betätigbaren Ventilen 7, 70 und den mechanisch betätigbaren Ventilen 8, 9 gebildete Ventileinrichtung.

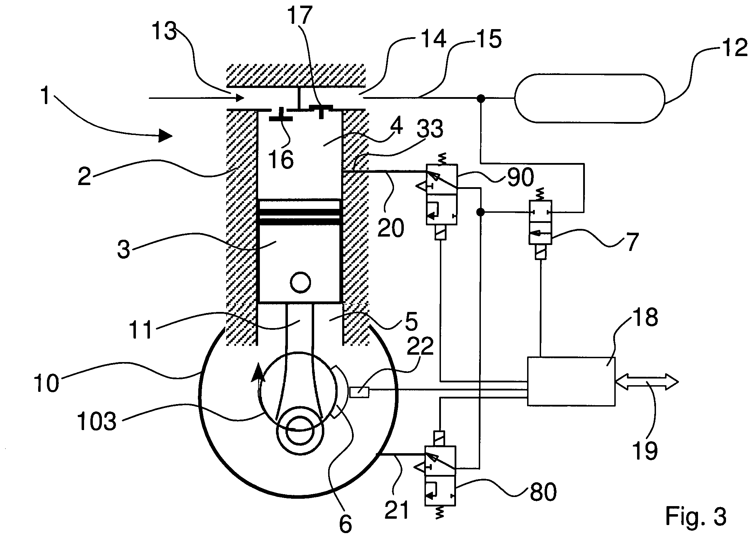

Die Figur 3 zeigt eine weitere vorteilhafte Ausführungsform der Drucksteuereinrichtung. Die Drucksteuereinrichtung weist wiederum das elektronische Steuergerät 18 auf. Die gemäß Figur 2 als mechanisch über die Nockenwellensteuerung mechanisch betätigbaren Ventile 8, 9 sind gemäß Figur 3 als elektrisch betätigbare Magnetventile ausgebildet, und zwar als drittes elektrisch betätigbares Ventil 80 und als viertes elektrisch betätigbares Ventil 90, wobei diese Ventile über elektrische Leitungen von dem elektronischen Steuergerät 18 steuerbar sind. Bezüglich ihrer pneumatischen Ventilfunktion entsprechend das dritte und das vierte elektrisch betätigbare Ventil 80, 90 den anhand der Figur 2 erläuterten mechanisch betätigbaren Ventilen 8, 9. Das Magnetventil 7 der Fig. 3 entspricht dem ersten elektrisch betätigbaren Ventil 7 gemäß Fig. 2, wobei bei der Ausführung gemäß Fig. 3 nur das erste elektrisch betätigbare Ventil 7 als zentrales Sperr/Durchlassventil vorgesehen ist, das zwischen dem dritten und vierten elektrisch betätigbaren Ventil 80, 90 und dem Druckluftspeicher 12 angeordnet ist. Die Verwendung von zwei Magnetventilen 7, 70 wie bei der Fig. 2 ist bei der Ausführung gemäß Fig. 3 grundsätzlich auch möglich, aber nicht unbedingt erforderlich, da das dritte und das vierte elektrisch betätigbare Ventil 80, 90 nicht permanent Nockenwellen-gesteuert sind, sondern von dem elektronischen Steuergerät 18 im Drucklufterzeugungsmodus in eine für die Drucklufterzeugung neutrale Stellung gebracht werden können. So kann im Drucklufterzeugungsmodus das dritte elektrisch betätigbare Ventil 80 unbetätigt und das vierte elektrisch betätigbare Ventil 90 betätigt sein. Auf diese Weise kann die Ausführung gemäß Fig. 3 kostengünstig mit nur einem Magnetventil 7 als zentrales Sperr/Durchlassventil ausgeführt werden.

Die Steuerung des dritten und des vierten elektrisch betätigbaren Ventils 80, 90 führt das elektronische Steuergerät 18 anhand von Informationen, die das elektronische Steuergerät 18 über den Datenbus 19 von einem Motorsteuergerät erhält, synchron zur Drehung der Antriebswelle 103 des Druckluftkompressors 1 aus. Hierdurch kann eine maximale Effizienz der Unterstützung des Antriebsmotors durch den Druckluftkompressor gewährleistet werden.

Ein eventuell benötigter Korrekturwert der relativen Winkellage der Kurbelwelle des Druckluftkompressors 1 zur Lage der Antriebswelle 103 kann anhand der zeitlichen Auswertung der Druckspitzen über die im Fahrzeug vorhandenen Drucksensoren von dem elektronischen Steuergerät 18 berechnet und berücksichtigt werden.

Alternativ kann das elektronische Steuergerät 18 zur Erfassung der Drehwinkel-Lage der Antriebswelle 103 auch mit einem elektrischen Sensor 22 verbunden sein, der direkt die Drehwinkel-Lage der Antriebswelle 103 bzw. der Kurbelwelle des Druckluftkompressors 1 erfasst. Der Sensor 22 kann beispielsweise ähnlich wie ein Sensor eines Antiblockiersystems als induktiver Sensor ausgeführt sein, der die Winkellage der Antriebswelle 103 bzw. der Kurbelwelle des Druckluftkompressors 1 durch Erfassung der Position eines Nockens 6 sensiert.

Wie erkennbar ist, umfasst die Drucksteuereinrichtung in der Ausführungsform gemäß Figur 3 das elektronische Steuergerät 18, den Sensor 22 und eine aus dem ersten, dem dritten und dem vierten elektrisch betätigbaren Ventil 7, 80, 90 gebildete Ventileinrichtung.

Bei den Einrichtungen gemäß den Figuren 2 und 3 wird der Druckluftexpansionsmodus durch das elektronische Steuergerät 18 aktiviert, indem das erste elektrisch betätigbare Ventil 7 und ggf. das zweite elektrisch betätigbare Ventil 70 von der Sperrstellung in die Durchlassstellung geschaltet wird. Hierdurch wird über das erste und das zweite mechanisch betätigbare Ventil 8, 9 bzw. das dritte und das vierte elektrisch betätigbare Ventil 80, 90 eine entsprechende Druckbeaufschlagung des Kompressionsraums bzw. des Innenraums 5 des Kurbelgehäuses 10 ermöglicht. Auf Grund der Ausführung des Kompressions-Einlassventils 16 als Rückschlagventil ist keine besondere Steuerung des Kompressions-Einlassventils 16 im Druckluftexpansionsmodus erforderlich. Durch Druckluftbeaufschlagung des Kompressionsraums über die Druckluftleitung 20 schließt das Kompressions-Einlassventil 16 selbsttätig. Auch ist keine besondere Steuerung des Kompressions-Auslassventils 17 erforderlich, da dieses über den über die Druckluftleitung 15 am Auslassanschluss 14 anstehenden Druck geschlossen gehalten wird.

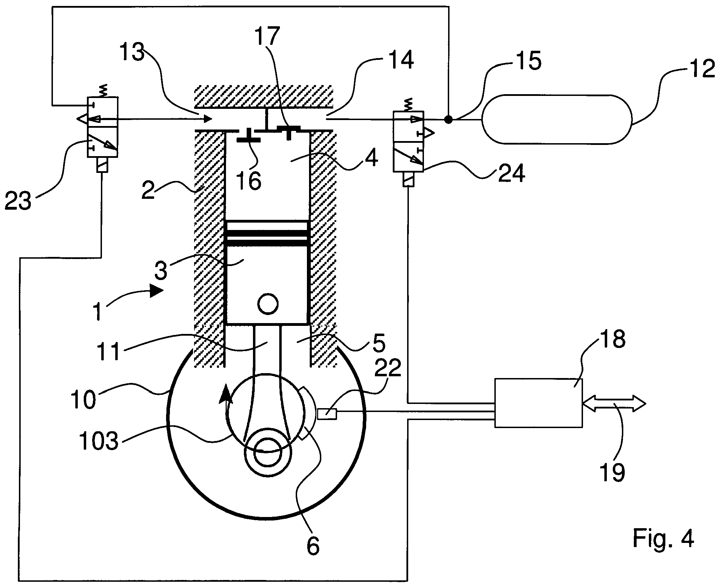

Wie zudem erkennbar ist, können die Ausführungsformen gemäß den Figuren 2 und 3 vorteilhaft auch ohne diejenigen Ventile realisiert werden, die für die Druckbeaufschlagung des Kurbelgehäuses 10 vorgesehen sind. In diesem Fall kann die Erfindung mit weniger Modifikationen an dem Druckluftkompressor und mit weniger Bauteilen realisiert werden, allerdings auch ohne die Möglichkeit der Unterstützung des Antriebs des Fahrzeugs in den Aufwärtsphasen des Kolbens 3. In analoger Weise können die nachfolgend beschriebenen Ausführungsformen gemäß den Figuren 4 bis 8 auch zusätzlich mit der anhand der Figuren 2 und 3 beschriebenen Druckbeaufschlagung des Kurbelgehäuses 10 ausgestaltet sein.

Die Figur 4 zeigt eine vorteilhafte Ausgestaltung der Drucksteuereinrichtung, die in Verbindung mit einem Druckluftkompressor 1 üblicher Bauart verwendet werden kann, ohne dass Modifikationen an dem Druckluftkompressor erforderlich sind. Die Ausführungsform gemäß Figur 4 eignet sich daher besonders für die Nachrüstung der Erfindung bei vorhandenen Fahrzeugen, bei denen kein zusätzlicher Druckluftanschluss am Kompressionsraum 4 des Druckluftkompressors 1 nachgerüstet werden soll. Die Drucksteuereinrichtung weist das bereits erläuterte elektronische Steuergerät 18 auf, das je nach Bedarf mit dem Datenbus 19 oder einem Sensor 22 verbunden sein kann. Die Drucksteuereinrichtung weist zudem ein als Magnetventil ausgebildetes fünftes elektrisch betätigbares Ventil 23 sowie ein als Magnetventil ausgebildetes sechstes elektrisch betätigbares Ventil 24 auf. Das fünfte elektrisch betätigbare Ventil 23 ist dem Einlassanschluss 13 des Druckluftkompressors 1 vorgeschaltet. Das sechste elektrisch betätigbare Ventil 24 ist dem Auslassanschluss 14 des Druckluftkompressors nachgeschaltet und in der Druckluftleitung 15 zu dem Druckluftspeicher 12 angeordnet. Das fünfte elektrisch betätigbare Ventil 23 ist als 3/2-Wegeventil ausgebildet. Ebenso ist das sechste elektrisch betätigbare Ventil 24 als 3/2-Wegenventil ausgebildet. Jedoch können die erwähnten 3/2-Wegeventile auch als Kombination zweier 2/2-Wegeventile ausgebildet sein.

Das fünfte elektrisch betätigbare Ventil 23 kann in einer Schaltstellung den Einlassanschluss 13 des Druckluftkompressors 1 mit der Atmosphäre verbinden, wie in Figur 4 dargestellt. In einer zweiten Schaltstellung kann das fünfte elektrisch betätigbare Ventil 23 den Einlassanschluss 13 mit dem Druckluftspeicher 12 verbinden.

Das sechste elektrisch betätigbare Ventil 24 kann den Auslassanschluss 14 des Druckluftkompressors in der in der Figur 4 dargestellten Schaltstellung mit dem Druckluftspeicher 12 verbinden. In einer zweiten Schaltstellung kann das sechste elektrisch betätigbare Ventil 24 den Auslassanschluss 14 mit der Atmosphäre verbinden.

Das elektronische Steuergerät 18 steuert das fünfte und das sechste elektrisch betätigbare Ventil 23, 24 derart, dass im Drucklufterzeugungsmodus sowohl das fünfte elektrisch betätigbare Ventil 23 als auch das sechste elektrisch betätigbare Ventil 24 unbetätigt und damit in ihrer in der Figur 4 dargestellten Schaltstellung sind. Hierbei ist der Einlassanschluss 13 mit der Atmosphäre verbunden, der Auslassanschluss 14 ist mit der Druckluftversorgungs- und Speicheranlage 12 verbunden. In dem Druckluftexpansionsmodus steuert das elektronische Steuergerät 18 das fünfte und das sechste elektrisch betätigbare Ventil 23, 24 in Abhängigkeit von der Drehwinkel-Lage der Antriebswelle 103 an, d. h. je nach Vorliegen einer Volumenverringerungs- oder Volumenvergrößerungsphase. Die Drehwinkel-Lage wird beispielsweise über den Sensor 22 oder durch Empfang entsprechender Informationen über den Datenbus 19 von einem Motorsteuergerät bestimmt.

Im Druckluftexpansionsmodus betätigt das elektronische Steuergerät 18 in einer Volumenvergrößerungsphase das fünfte elektrisch betätigbare Ventil 23. Hierdurch wird der Kompressionsraum 4 mit dem Druckluftspeicher 12 verbunden, so dass der Kompressionsraum 4 über das sich selbsttätig öffnende Kompressions-Einlassventil 16 mit dem Druck im Druckluftspeicher 12 beaufschlagt wird. Das sechste elektrisch betätigbare Ventil 24 ist dabei unbetätigt. Hierdurch wird das Kompressions-Auslassventil 17 über den von dem Druckluftspeicher 12 anstehenden Druck geschlossen gehalten.

im Druckluftexpansionsmodus betätigt das elektronische Steuergerät 18 in einer Volumenverringerungsphase das sechste elektrisch betätigbare Ventil 24, während das fünfte elektrisch betätigbare Ventil 23 unbetätigt ist. Hierdurch wird der im Kompressionsraum 4 aufgebaute Druck über das sich hierbei selbsttätig öffnende Kompressions-Auslassventil 17 über den Entlüftungsanschluss des sechsten elektrisch betätigbaren Ventils 24 abgebaut. In Folge des unbetätigten fünften elektrisch betätigbaren Ventils 23 ist der Einlassanschluss 13 mit der Atmosphäre verbunden, so dass nicht unerwünschter Weise Druckluft von dem Druckluftspeicher 12 nachströmen kann.

Wie erkennbar ist, umfasst die Drucksteuereinrichtung in der Ausführungsform gemäß Figur 4 das elektronische Steuergerät 18 und eine aus dem fünften und dem sechsten elektrisch betätigbaren Ventil 23, 24 gebildete Ventileinrichtung.

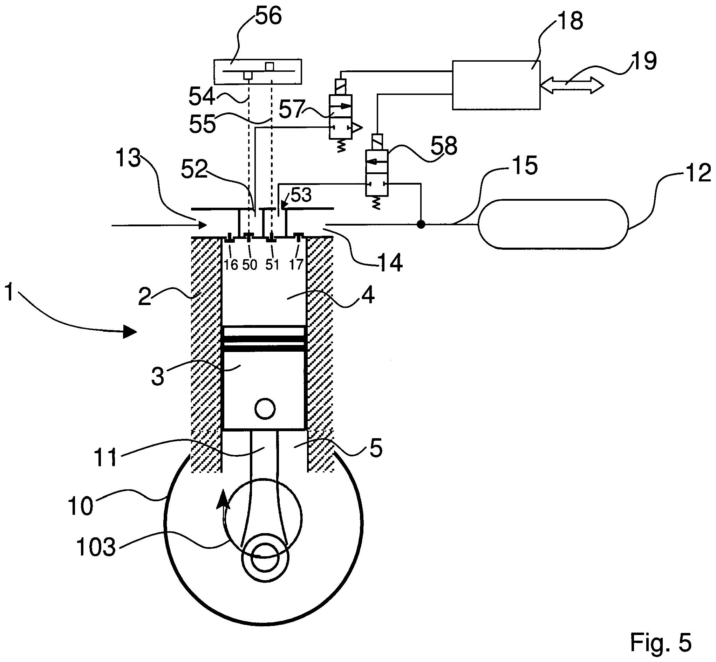

Die Figur 5 zeigt eine Ausführungsform, bei der der Zylinderkopf des Druckluftkompressors 1 modifiziert wurde. Der Zylinderkopf weist neben dem bereits anhand der Figuren 2 bis 4 erläuterten Kompressions-Einlassventil 16 und dem Kompressions-Auslassventil 17 ein Expansions-Auslassvenil 50 sowie Expansions-Einlassventil 51 auf. Über das Expansions-Auslassvenil 50 und das Expansions-Einlassventil 51 wird im Expansionsbetrieb des Druckluftkompressors, d. h. im Druckluftexpansionsmodus, in dem der Druckluftkompressor 1 den Antrieb des Fahrzeugs unterstützt, die Zufuhr von Luft in den Kompressionsraum 4 und deren Abfuhr gesteuert. Das Expansions-Auslassvenil 50 ist über einen separaten Expansions-Auslassanschluss 52 des Zylinderkopfs mit einem siebten elektrisch betätigbaren Ventil 57 verbunden, das als 2/2-Wege-Ventil ausgebildet ist. Das siebte elektrisch betätigbare Ventil 57 verbindet bei elektrischer Betätigung den Expansions-Auslassanschluss 52 mit der Atmosphäre oder sperrt den Expansions-Auslassanschluss 52 in der in der Figur 5 dargestellten unbetätigten Stellung gegenüber der Atmosphäre ab. Das Expansions-Einlassventil 51 ist über einen separaten Expansions-Einlassanschluss 53 im Zylinderkopf mit einem achten elektrisch betätigbaren Ventil 58 verbunden, das als 2/2-Wege-Ventil ausgebildet ist. Das achte elektrisch betätigbare Ventil 58 verbindet in einer betätigten Stellung den Expansions-Einlassanschluss 53 mit der Druckluftversorgungs- und Speicheranlage 12 bzw. sperrt diese Verbindung in der unbetätigten Stellung, die in der Figur 5 dargestellt ist, ab. Das siebte und das achte elektrisch betätigbare Ventil 57, 58 sind zur elektrischen Betätigung mit dem elektronischen Steuergerät 18 verbunden.

Das Expansions-Auslassvenil 50 und das Expansions-Einlassventil 51 ist zudem mechanisch kurbelwellengesteuert, und zwar über eine Nockenwelle 56 mittels Betätigungsstößeln 54, 55, die auf das Expansions-Auslassventil 50 bzw. das Expansions-Einlassventil 51 mechanisch einwirken. Die Nockenwelle 56 ist mit der Kurbelwelle des Druckluftkompressors 1, die zugleich der Antriebswelle 103 entspricht, oder mit der Abtriebswelle des Antriebsmotors 101 verbunden.

Das elektronische Steuergerät 18 lässt das siebte und das achte elektrisch betätigbare Ventil 57, 58 im Drucklufterzeugungsmodus unbetätigt. In diesem Fall führt der Druckluftkompressor 1 eine Drucklufterzeugung in Folge der normalen Funktion des Kompressions-Einlassventils 16 und des Kompressions-Auslassventils 17 aus. Im Druckluftexpansionsmodus betätigt das elektronische Steuergerät 18 das siebte und das achte elektrisch betätigbare Ventil 57, 58 permanent. Hierdurch wird die Nockenwellensteuerung des Expansions-Auslassventils 50 und des Expansions-Einlassventils 51 wirksam gemacht. Durch die Nockenwellensteuerung wird das Expansions-Einlassventil 51 in einer Volumenvergrößerungsphase, d. h. bei einer Abwärtsbewegung des Kolbens 3, geöffnet, wodurch Druckluft von dem Druckluftspeicher 12 über das achte elektrisch betätigbare Ventil 58 in den Kompressionsraum 4 einströmen kann. In einer Volumenverringerungsphase, d. h. bei einer Aufwärtsbewegung des Kolbens 3, ist das Expansions-Einlassventil 51 durch die Nockenwellensteuerung geschlossen. Zugleich wird das Expansions-Auslassventil 50 durch die Nockenwellensteuerung geöffnet, so dass die Luft im Kompressionsraum 4 über das siebte elektrisch betätigbare Ventil 57 in die Atmosphäre entweichen kann. Hierbei wird in dem Druckluftexpansionsmodus das Kompressions-Einlassventil 16 automatisch durch den im Kompressionsraum 4 befindlichen Überdruck geschlossen gehalten. Das Kompressions-Auslassventil 17 wird durch den vom Druckluftspeicher 12 am Auslassanschluss 14 anstehenden Druck geschlossen gehalten.

Wie erkennbar ist, umfasst die Drucksteuereinrichtung in der Ausführungsform gemäß Figur 5 das elektronische Steuergerät 18 und eine aus dem siebten und dem achten elektrisch betätigbaren Ventil 57, 58 gebildete Ventileinrichtung.

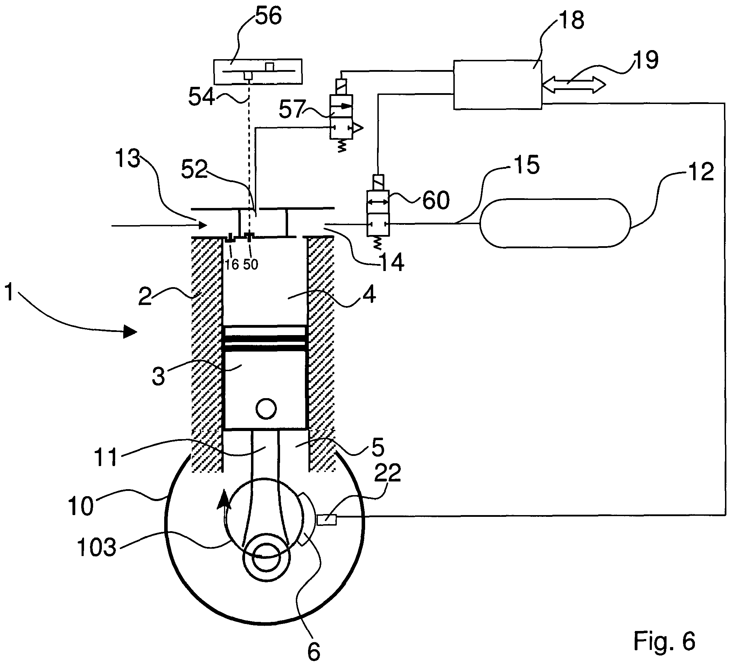

Die Figur 6 zeigt eine Ausführungsform, die der Ausführungsform der Figur 5 ähnelt, so dass im Folgenden auf die Unterschiede eingegangen wird. Gemäß Figur 6 ist nur das Expansions-Auslassventil 50 im gleicher Weise wie zuvor zur Figur 5 beschrieben nockenwellengesteuert. Die Steuerung erfolgt in vergleichbarer Weise unter Verwendung des siebten elektrisch betätigbaren Ventils 57 wie bei der Ausführungsform gemäß Figur 5.

Im Unterschied zur Figur 5 ist bei der Ausführungsform gemäß Figur 6 kein Expansions-Einlassventil 51 und kein Kompressions-Auslassventil 17 vorgesehen. Stattdessen sind die bei Figur 5 dargestellten Anschlüsse 14, 53 zu einem gemeinsamen Auslassanschluss 14 im Zylinderkopf des Druckluftkompressors 1 zusammengefasst. Der Auslassanschluss 14 ist über ein neuntes elektrisch betätigbares Ventil 60, das als 2/2-Wege-Ventil ausgebildet ist, mit der Druckluftversorgungs- und Speicheranlage 12 verbunden. Das neunte elektrisch betätigbare Ventil 60 ist von dem elektronischen Steuergerät 18 elektrisch betätigbar. Bei Betätigung verbindet das neunte elektrisch betätigbare Ventil 60 den Auslassanschluss 14 mit der Druckluftversorgungs- und Speicheranlage 12. Im unbetätigten Fall, wie in der Figur 6 dargestellt, ist diese Verbindung abgesperrt.

Das elektronische Steuergerät 18 steuert das siebte elektrisch betätigbare Ventil 57 in der gleichen Weise wie zuvor bezüglich der Figur 5 beschrieben. Auch die Nockenwellensteuerung des Expansionsauslassventils 50 erfolgt in gleicher Weise. Im Unterschied zur Figur 5 wird bei der Ausführungsform gemäß Figur 6 das neunte elektrisch betätigbare Ventil 60 von dem elektronischen Steuergerät 18 entsprechend einer darin vorgesehenen Programmierung je nach Betriebsmodus der Druckluftanlage unterschiedlich betätigt. Im Drucklufterzeugungsmodus betätigt das elektronische Steuergerät 18 das neunte elektrisch betätigbare Ventil 60 in Abhängigkeit von der Kurbelwellenposition, die über den Sensor 22 erfasst wird, derart, dass bei einer Volumenverringerungsphase erst zum Ende der Volumenverringerungsphase das neunte elektrisch betätigbare Ventil 60 betätigt wird, z. B. etwa bei 35 bis 45° Kurbelwellenwinkel vor Erreichen des oberen Totpunkts. Hierdurch wird sichergestellt, dass der Kompressionsraum 4 erst bei Erreichen eines Überdrucks mit dem Druckluftspeicher 12 verbunden wird. Vorteilhaft ist dem elektronischen Steuergerät 18 zudem eine Information über den aktuell vorliegenden Druck in dem Druckluftspeicher 12 zugeführt. Die Information kann entweder über den Datenbus 19 oder über einen separaten Drucksensor, der mit dem Druckluftspeicher 12 oder anderen Teilen der Druckluftversorgungs- und Speicheranlage verbunden ist, dem elektronischen Steuergerät 18 zugeführt werden. Vorteilhaft wird der Beginn der Betätigung des neunten elektrisch betätigbaren Ventils 60 sowie die Dauer der Betätigung von dem elektronischen Steuergerät 18 in Abhängigkeit von dem aktuellen Druck in dem Druckluftspeicher 12 festgelegt. Hierfür können in dem elektronischen Steuergerät 18 entsprechende Kennlinien oder Daten hinterlegt sein.

In dem Druckluftexpansionsmodus betätigt das elektronische Steuergerät 18 das neunte elektrisch betätigbare Ventil 60 ebenfalls abhängig von dem Kurbelwellenwinkel, und zwar dann, wenn eine Volumenvergrößerungsphase beginnt. Beispielsweise schaltet das elektronische Steuergerät 18 das neunte elektrisch betätigbare Ventil 60 bereits mit Erreichen des oberen Totpunkts ein und schaltet das neunte elektrisch betätigbare Ventil 60 z. B. bei 15 bis 30° Kurbelwellenwinkel nach dem oberen Totpunkt wieder aus.

Wie erkennbar ist, umfasst die Drucksteuereinrichtung in der Ausführungsform gemäß Figur 6 das elektronische Steuergerät 18 und eine aus dem siebten und dem neunten elektrisch betätigbaren Ventil 57, 60 gebildete Ventileinrichtung.

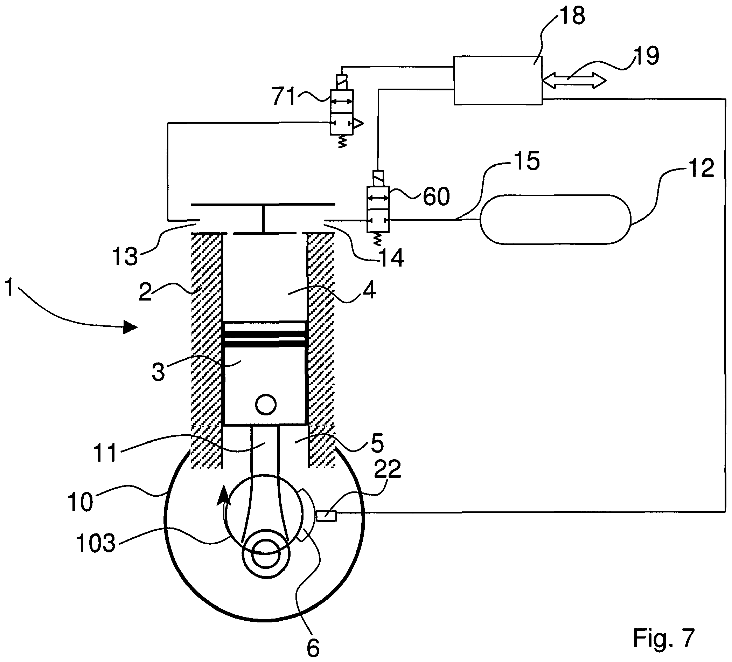

Die Figur 7 zeigt eine hinsichtlich des Bauteilaufwands weiter optimierte Ausführungsform der Erfindung. Hierbei ist der Druckluftkompressor 1 von sämtlichen bei der Ausführungsform gemäß Figur 5 im Zylinderkopf dargestellten Ventilen befreit, nämlich vom Kompressions-Einlassventil 16, vom Kompressions-Auslassventil 17, vom Expansions-Auslassventil 50 und vom Expansions-Einlassventil 51. Stattdessen ist der Einlassanschluss 13 über ein zehntes elektrisch betätigbares Ventil 71, das als 2/2-Wege-Ventil ausgebildet ist, mit der Atmosphäre verbindbar. Der Auslassanschluss 14 ist über das schon anhand der Fig. 6 erläuterte neunte elektrisch betätigbare Ventil 60 mit der Druckluftversorgungs- und Speicheranlage 12 verbindbar. In der in Figur 7 sind das neunte und das zehnte elektrisch betätigbare Ventil 60, 71 wiederum im unbetätigten Fall dargestellt, d.h. in der Absperrstellung. Bei elektrischer Betätigung des neunten bzw. des zehnten elektrisch betätigbaren Ventils 60, 71 durch das elektronische Steuergerät 18 wird dieses in die jeweilige Durchlassstellung geschaltet.

Das elektronische Steuergerät 18 steuert dabei das neunte elektrisch betätigbare Ventil 60 in dem Drucklufterzeugungsmodus und in dem Druckluftexpansionsmodus in gleicher Weise wie zuvor bezüglich der Figur 6 beschrieben. Das zehnte elektrisch betätigbare Ventil 71 wird von dem elektronischen Steuergerät 18 in dem Drucklufterzeugungsmodus in Abhängigkeit von dem Kurbelwellenwinkel derart gesteuert, dass bei vorliegendem Unterdruck im Kompressionsraum 4 die Verbindung zur Atmosphäre hergestellt wird. In einer vorteilhaften Ausgestaltung wird das zehnte elektrisch betätigbare Ventil 71 während der gesamten Volumenvergrößerungsphase, d. h. vom oberen Totpunkt bis hin zum unteren Totpunkt hin, geöffnet. Im Druckluftexpansionsmodus wird in einer vorteilhaften Ausführungsform das zehnte elektrisch betätigbare Ventil 71 von dem elektronischen Steuergerät 18 während der gesamten Volumenverringerungsphase, d. h. vom unteren Totpunkt bis hin zum oberen Totpunkt, durchgehend geöffnet. In den übrigen Zeiten ist das zehnte elektrisch betätigbare Ventil 71 unbetätigt und damit die Verbindung zur Atmosphäre abgesperrt.

Wie erkennbar ist, umfasst die Drucksteuereinrichtung in der Ausführungsform gemäß Figur 7 das elektronische Steuergerät 18 und eine aus dem neunten und dem zehnten elektrisch betätigbaren Ventil 60, 71 gebildete Ventileinrichtung.

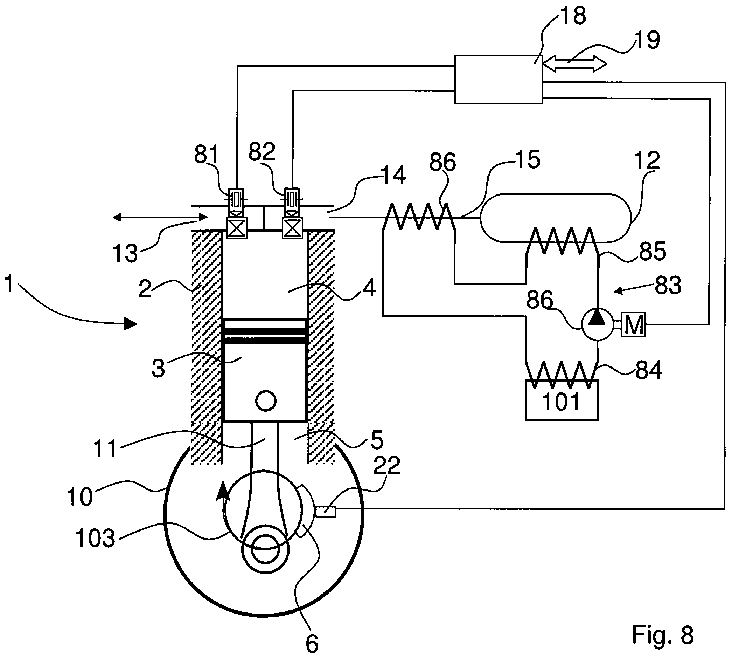

Die Figur 8 zeigt eine weitere vorteilhafte Ausführungsform der Erfindung, wobei bezüglich des zuvor anhand der Figur 7 erläuterten neunten und zehnten elektrisch betätigbaren Ventils 60, 71 das gleiche Funktionsprinzip realisiert ist wie bei der Ausführungsform der Figur 7. Im Unterschied zur Figur 7 sind die elektrisch betätigbaren Ventile als direkt in den Zylinderkopf integrierte piezoelektrisch betätigbare 2/2-Wege-Ventile in Form eines elften elektrisch betätigbaren Ventils 81 und eines eines zwölften elektrisch betätigbaren Ventils 82 ausgebildet. Das elfte und das zwölfte elektrisch betätigbare Ventil 81, 82 weisen ebenfalls wiederum jeweils eine bei Betätigung eingenommene Öffnungsstellung und eine Schließstellung auf. Bei Betätigung verbindet das elfte elektrisch betätigbare Ventil 81 den Einlassanschluss 13 mit dem Kompressionsraum 4, im unbetätigten Fall ist diese Verbindung abgesperrt. Bei Betätigung verbindet das zwölfte elektrisch betätigbare Ventil 82 den Auslassanschluss 14 mit dem Kompressionsraum 4, im unbetätigten Fall ist diese Verbindung abgesperrt.

Wie erkennbar ist, umfasst die Drucksteuereinrichtung in der Ausführungsform gemäß Figur 3 das elektronische Steuergerät 18 und eine aus dem elften und dem zwölften elektrisch betätigbaren Ventil 81, 82 gebildete Ventileinrichtung.

In der Figur 8 ist eine weitere vorteilhafte Weiterbildung der Erfindung beispielhaft dargestellt. Vorgesehen ist ein Wärmetauscher 83. Der Wärmetauscher 83 weist ein Wärmeaufnahmeelement 84 auf, das z. B. als spiralförmiger Wendel ausgebildet sein kann. Das Wärmeaufnahmeelement 84 ist thermisch mit dem Antriebsmotor 101 oder einem damit thermisch verbundenen Teil gekoppelt. Der Wärmetauscher 83 weist außerdem ein erstes Wärmeabgabeelement 85 auf, das thermisch mit dem Druckluftspeicher 12 gekoppelt ist, sowie ein zweites Wärmeabgabeelement 86, das thermisch mit der Druckluftleitung 15 gekoppelt ist. Es ist auch möglich, dass nur eines der Wärmeabgabeelemente 85, 86 vorgesehen ist. Die Wärmeabgabeelemente 85, 86 können vergleichbar wie das Wärmeaufnahmeelement 84 aufgebaut sein. Das Wärmeaufnahmeelement 84, das erste Wärmeabgabeelement 85 und das zweite Wärmeabgabeelement 86 sind über entsprechende Rohrleitungen miteinander verbunden. Durch die Rohrleitungen wird ein Wärmeübertragungsmedium, z. B. Wasser, gepumpt. Hierzu ist in einer der Rohrleitungen eine beispielsweise elektromotorisch angetriebene Pumpe 86 angeordnet. Die Pumpe 86 kann elektrisch von dem elektronischen Steuergerät 18 gesteuert werden. Das elektronische Steuergerät 18 kann hierbei die Pumpe 86 je nach Bedarf ein- oder ausschalten. Durch den beschriebenen Wärmetauscher 83 kann Abwärme des Antriebsmotors 101 zur Erwärmung der Druckluft in der Druckluftversorgungs- und Speicheranlage 12 genutzt werden.

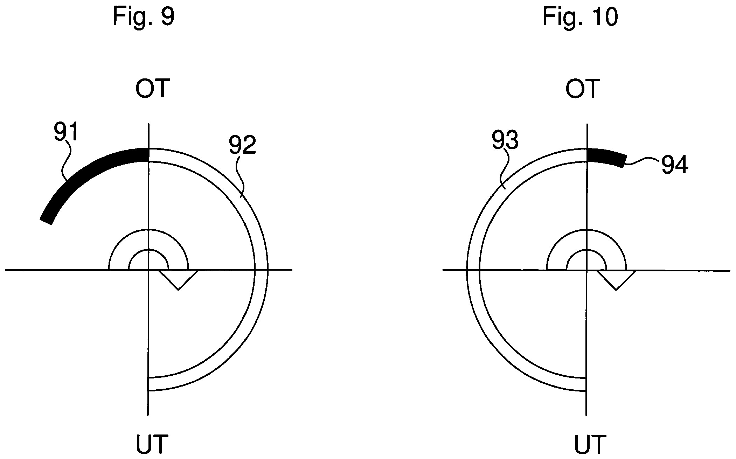

Die Figur 9 zeigt vorteilhafte Steuerzeiten der diversen zuvor beschriebenen Ventile in Abhängigkeit vom Kurbelwellenwinkel ϕ des Druckluftkompressors 1. In der Figur 9 sind die Steuerzeiten dargestellt, wenn der Druckluftkompressor 1 im Kompressorbetrieb, d. h. im Drucklufterzeugungsmodus, betrieben wird. Wie erkennbar ist, wird in einem Winkelbereich von dem unteren Totpunkt UT hin zum oberen Totpunkt OT (Volumenverringerungsphase) ein Ventil, das den Kompressionsraum 4 mit der Druckluftversorgungs- und Speicheranlage 12 verbindet, nur während eines vergleichsweise kurzen Zeitabschnitts 91 geöffnet. Das Ventil wird mit Erreichen des oberen Totpunkts OT geschlossen. In diesem Zeitraum kann komprimierte Luft aus dem Kompressionsraum 4 in die Druckluftversorgungs- und Speicheranlage 12 einströmen. Hingegen wird in der Volumenvergrößerungsphase, beginnend mit dem oberen Totpunkt OT bis hin zum unteren Totpunkt UT, ein Ventil, das den Kompressionsraum 4 mit der Atmosphäre verbindet, während eines relativ langen Zeitraums 92 geöffnet, der sich über die gesamte Volumenvergrößerungsphase erstreckt.

Die Figur 10 zeigt eine Betätigung der zuvor erwähnten Ventile im Expansionsbetrieb des Druckluftkompressors, d. h. im Druckluftexpansionsmodus, in dem der Druckluftkompressor zugleich als Antrieb für das Fahrzeug dient. Dargestellt ist wiederum die Ventilbetätigung über den Kurbelwellenwinkel ϕ des Druckluftkompressors 1. Wie erkennbar ist, wird während der Volumenverringerungsphase während eines relativ langen Zeitraums 93, der sich über die gesamte Volumenverringerungsphase vom unteren Totpunkt UT bis hin zum oberen Totpunkt OT erstreckt, ein Ventil geöffnet, das den Kompressionsraum 4 mit der Atmosphäre verbindet. Hingegen wird nach Erreichen des oberen Totpunkts OT sofort ein anderes Ventil geöffnet, das den Kompressionsraum 4 mit der Druckluftversorgungs- und Speicheranlage 12 verbindet. Dies Ventil wird jedoch nur während eines vergleichsweise kurzen Zeitraums 94 geöffnet und alsbald, z. B. etwa 15° nach dem oberen Totpunkt, wieder geschlossen.

Es ist vorteilhaft, die zuvor erwähnten Ventile mit ausreichend großen Druckluft-Querschnittsflächen auszugestalten, um eine schnelle Befüllung und Entlüftung des Kompressionsraums 4 bzw. des Innenraums 5 des Kurbelgehäuses 10 in dem Druckluftexpansionsmodus zu gewährleisten.

## Patentansprüche

1. Drucksteuereinrichtung (7, 8, 9, 18, 22, 23, 24, 57, 58, 60, 70, 71, 80, 81, 82, 90) für ein Fahrzeug (100), wobei das Fahrzeug (100) wenigstens einen Antriebsmotor (101) zur Erzeugung einer Antriebskraft des Fahrzeuges, eine Druckluftversorgungs- und Speicheranlage (12) und einen mit dem Antriebsmotor (101) des Fahrzeugs gekoppelten oder koppelbaren Druckluftkompressor (1) aufweist, und die Drucksteuereinrichtung (7, 8, 9, 18, 22, 23, 24, 57, 58, 60, 70, 71, 80, 81, 82, 90) wenigstens ein elektronisches Steuergerät (18) und wenigstens eine Ventileinrichtung (7, 8, 9, 23, 24, 57, 58, 60, 70, 71, 80, 81, 82, 90) zur steuerbaren Verbindung eines Kompressionsraums (4) des Druckluftkompressors (1) mit der Druckluftversorgungs- und Speicheranlage (12) aufweist, mit den Merkmalen:
b) die Drucksteuereinrichtung (7, 8, 9, 18, 22, 23, 24, 57, 58, 60, 70, 71, 80, 81, 82, 90) ist dazu eingerichtet, in einem Drucklufterzeugungsmodus den Kompressionsraum (4) mit der Druckluftversorgungs- und Speicheranlage (12) zur Förderung von Druckluft von dem Kompressionsraum (4) in die Druckluftversorgungs- und Speicheranlage (12) zu verbinden,
c) die Drucksteuereinrichtung (7, 8, 9, 18, 22, 23, 24, 57, 58, 60, 70, 71, 80, 81, 82 90) ist dazu eingerichtet, in einem Druckluftexpansionsmodus den Kompressionsraum (4) mit der Druckluftversorgungs- und Speicheranlage (12) zur Förderung von Druckluft von der Druckluftversorgungs- und Speicheranlage (12) in den Kompressionsraum (4) zu verbinden,
c) die Drucksteuereinrichtung (7, 8, 9, 18, 22, 23, 24, 57, 58, 60, 70, 71, 80, 81, 82 90) eingerichtet ist zur Umschaltung von dem Drucklufterzeugungsmodus in den Druckluftexpansionsmodus und umgekehrt durch elektrische Betätigung einer oder mehrerer elektrisch betätigbarer Ventile (7, 23, 24, 57, 58, 60, 70, 71, 80, 81, 82, 90) der Ventileinrichtung (7, 8, 9, 23, 24, 57, 58, 60, 70, 71, 80, 81, 82, 90) durch das elektronische Steuergerät (18), **dadurch gekennzeichnet, dass** wenigstens ein Teil der elektrisch betätigbaren Ventile (7, 23, 24, 57, 58, 60, 70, 71, 80, 81, 82, 90) in einem Zylinder (2), insbesondere in den Zylinderkopf, und/oder wenigstens ein Teil der elektrisch betätigbaren Ventile (7, 23, 24, 57, 58, 60, 70, 71, 80, 81, 82, 90) in ein Kurbelgehäuse (10) des Druckluftkompressors (1) integriert sind.

2. Drucksteuereinrichtung nach Anspruch 1, **dadurch gekennzeichnet, dass** alle oder wenigstens ein Teil der elektrisch betätigbaren Ventile (7, 23, 24, 57, 58, 60, 70, 71, 80, 81, 82, 90) als piezoelektrisch, elektromagnetisch, elektromotorisch, elektropneumatisch oder elektrohydraulisch betätigbare Ventile ausgebildet sind.

3. Drucksteuereinrichtung nach einem der vorhergehenden Ansprüche, **dadurch gekennzeichnet, dass** wenigstens ein Teil der elektrisch betätigbaren Ventile (7, 23, 24, 57, 58, 60, 70, 71, 80, 81, 82, 90) dem Einlassanschluss (13) des Druckluftkompressors (1) vorgeschaltet und/oder wenigstens ein Teil der elektrisch betätigbaren Ventile (7, 23, 24, 57, 58, 60, 70, 71, 80, 81, 82, 90) dem Auslassanschluss (14) des Druckluftkompressors (1) nachgeschaltet sind.

4. Drucksteuereinrichtung nach einem der vorhergehenden Ansprüche, **dadurch gekennzeichnet, dass** die Ventileinrichtung (7, 8, 9, 23, 24, 57, 58, 60, 70, 71, 80, 81, 82, 90) mit einer zusätzlichen Anzapfung (33) des Kompressionsraums (4) des Druckluftkompressors (1) verbunden ist.

5. Drucksteuereinrichtung nach einem der vorhergehenden Ansprüche, **dadurch gekennzeichnet, dass** die Ventileinrichtung (7, 8, 9, 23, 24, 57, 58, 60, 70, 71, 80, 81, 82, 90) ein Verbindungsventil aufweist, das zum direkten Verbinden zweier Kompressionsräume eines Mehrzylinder-Druckluftkompressors eingerichtet ist, und die Drucksteuereinrichtung (7, 8, 9, 18, 22, 23, 24, 57, 58, 60, 70, 71, 80, 81, 82 90) dazu eingerichtet ist, in einem Leerlaufmodus das Verbindungsventil zu öffnen, wodurch die an das Verbindungsventil angeschlossenen Kompressionsräume miteinander verbunden sind.

6. Drucksteuereinrichtung nach einem der vorhergehenden Ansprüche, **dadurch gekennzeichnet, dass** das Volumen des Kompressionsraums (4) zeitlich variabel ist, wobei in einer Volumenverringerungsphase das Volumen zeitlich abnimmt und in einer Volumenvergrößerungsphase das Volumen zeitlich zunimmt, und die Drucksteuereinrichtung (7, 8, 9, 18, 22, 23, 24, 57, 58, 60, 70, 71, 80, 81, 82 90) dazu eingerichtet ist, in dem Druckluftexpansionsmodus den Kompressionsraum (4) während einer Volumenvergrößerungsphase mit der Druckluftversorgungs- und Speicheranlage (12) zu verbinden und während einer Volumenverringerungsphase mit der Atmosphäre zu verbinden, wobei die Verbindung mit der Druckluftversorgungs- und Speicheranlage (12) nur während eines Teils der Volumenvergrößerungsphase hergestellt ist.

7. Drucksteuereinrichtung nach Anspruch 6, **dadurch gekennzeichnet, dass** die Verbindung des Kompressionsraums (4) mit der Druckluftversorgungs- und Speicheranlage (12) unmittelbar mit Beginn der Volumenvergrößerungsphase hergestellt ist.

8. Drucksteuereinrichtung nach Anspruch 6 oder 7, **dadurch gekennzeichnet, dass** die Verbindung des Kompressionsraums (4) mit der Druckluftversorgungs- und Speicheranlage (12) nur während der halben Dauer der Volumenvergrößerungsphase, insbesondere nur während eines Achtels der Volumenvergrößerungsphase, hergestellt ist.

9. Drucksteuereinrichtung nach einem der vorhergehenden Ansprüche, **dadurch gekennzeichnet, dass** die Drucksteuereinrichtung (7, 8, 9, 18, 22, 23, 24, 57, 58, 60, 70, 71, 80, 81, 82, 90) dazu eingerichtet ist, Schubphasen im Betrieb des Fahrzeugs (100) zu erkennen und bei Vorliegen einer Schubphase den Druckluftkompressor (1) im Drucklufterzeugungsmodus zu betreiben, und dass die Drucksteuereinrichtung (7, 8, 9, 18, 22, 23, 24, 57, 58, 60, 70, 71, 80, 81, 82, 90) dazu eingerichtet ist, Phasen mit erhöhtem Antriebskraft-Bedarf im Betrieb des Fahrzeugs (100) zu erkennen und bei Vorliegen einer Phase mit erhöhtem Antriebskraft-Bedarf den Druckluftkompressor (1) im Druckluftexpansionsmodus zu betreiben.

10. Drucksteuereinrichtung nach einem der vorhergehenden Ansprüche, **dadurch gekennzeichnet, dass** das elektronische Steuergerät (18) von einem Motorsteuergerät eine Information über die Winkellage der Abtriebswelle (103) des Fahrzeugmotors (101) empfängt.

11. Drucksteuereinrichtung nach einem der vorhergehenden Ansprüche, **dadurch gekennzeichnet, dass** das elektronische Steuergerät (18) dazu eingerichtet ist, über wenigstens einen Drucksensor die Druckspitzen aufgrund des Kompressionsvorgangs zeitlich auszuwerten, hieraus als Korrekturwert eine Winkeldifferenz zwischen der Winkellage der Kurbelwelle des Druckluftkompressors (1) und der Winkellage der Abtriebswelle (103) des Fahrzeugmotors (101) zu bestimmen und den errechneten Korrekturwert für die phasenrichtige Steuerung der Ventileinrichtung (7, 8, 9, 23, 24, 57, 58, 60, 70, 71, 80, 81, 82, 90) zu verwenden.

12. Drucksteuereinrichtung nach einem der vorhergehenden Ansprüche, **dadurch gekennzeichnet, dass** die Drucksteuereinrichtung (7, 8, 9, 18, 22, 23, 24, 57, 58, 60, 70, 71, 80, 81, 82, 90) ein Ventil (8) aufweist, über das ein Kurbelgehäuse (10) des Druckluftkompressors (1) mit Druckluft aus der Druckluftversorgungs- und Speicheranlage (12) beaufschlagbar ist.

13. Fahrzeug-Druckluftanlage mit einer Drucksteuereinrichtung (7, 8, 9, 18, 22, 23, 24, 57, 58, 60, 70, 71, 80, 81, 82, 90) und einem Druckluftkompressor (1) nach einem der vorhergehenden Ansprüche.

14. Fahrzeug-Druckluftanlage nach Anspruch 13, **dadurch gekennzeichnet, dass** ein Wärmetauscher (83) vorgesehen ist, der einerseits mit dem Antriebsmotor (101) oder mit von dem Antriebsmotor (101) erwärmten Teilen des Fahrzeugs (100) thermisch gekoppelt ist und andererseits mit Teilen der Druckluftversorgungs- und Speicheranlage (12) zur Abgabe der von dem Antriebsmotor (101) oder von der von dem Antriebsmotor (101) erwärmten Teilen aufgenommenen Wärme an die Druckluft in der Druckluftversorgungs- und Speicheranlage (12) thermisch gekoppelt ist.

15. Fahrzeug-Druckluftanlage nach Anspruch 14, **dadurch gekennzeichnet, dass** die Drucksteuereinrichtung (7, 8, 9, 18, 22, 23, 24, 57, 58, 60, 70, 71, 80, 81, 82, 90) dazu eingerichtet ist, die Wärmeabgabe an die Druckluftversorgungs- und Speicheranlage (12) nur dann zuzulassen, wenn der Drucklufterzeugungsmodus nicht aktiviert ist.

16. Fahrzeug-Druckluftanlage nach einem der Ansprüche 13 bis 15 mit einem Druckuftkompressor.

17. Verfahren zur Drucksteuerung in einem Fahrzeug (100), wobei das Fahrzeug (100) eine Drucksteuereinrichtung gemäß Anspruch 1 aufweist, mit den Merkmalen:
d) in einem Drucklufterzeugungsmodus wird Druckluft von einem Kompressionsraum (4) des Druckluftkompressors (1) in die Druckluftversorgungs- und Speicheranlage (12) geleitet,
b) in einem Druckluftexpansionsmodus wird Druckluft von der Druckluftversorgungs- und Speicheranlage (12) in den Kompressionsraum (4) geleitet, **dadurch gekennzeichnet, dass**
c) die Umschaltung von dem Drucklufterzeugungsmodus in den Druckluftexpansionsmodus und umgekehrt durch elektrische Betätigung einer oder mehrerer elektrisch betätigbarer Ventile (7, 23, 24, 57, 58, 60, 70, 71, 80, 81, 82, 90) der Ventileinrichtung (7, 8, 9, 23, 24, 57, 58, 60, 70, 71, 80, 81, 82, 90) durch ein elektronisches Steuergerät (18) erfolgt.

18. Verfahren nach Anspruch 17, **dadurch gekennzeichnet, dass** bei einer Schubphase im Betrieb des Fahrzeugs (100) der Druckluftkompressor (1) im Drucklufterzeugungsmodus betrieben wird und/oder in einer bei einer Phase mit erhöhtem Antriebskraft-Bedarf im Betrieb des Fahrzeugs (100) der Druckluftkompressor (1) im Druckluftexpansionsmodus betrieben wird.

## Claims

1. Pressure control device (7, 8, 9, 18, 22, 23, 24, 57, 58, 60, 70, 71, 80, 81, 82, 90) for a vehicle (100), the vehicle (100) having at least one engine (101) for generating vehicle drive power, a compressed air supply and storage installation (12) and a compressed air compressor (1) coupled or couplable to the vehicle engine (101), and the pressure control device (7, 8, 9, 18, 22, 23, 24, 57, 58, 60, 70, 71, 80, 81, 82, 90) having at least one electronic control apparatus (18) and at least one valve assembly (7, 8, 9, 23, 24, 57, 58, 60, 70, 71, 80, 81, 82, 90) for the controllable connection of a compression space (4) of the compressed air compressor (1) to the compressed air supply and storage installation (12), with the features:
b) the pressure control device (7, 8, 9, 18, 22, 23, 24, 57, 58, 60, 70, 71, 80, 81, 82, 90) is designed, in a compressed air generation mode, for connecting the compression space (4) to the compressed air supply and storage installation (12) for the conveyance of compressed air from the compression space (4) into the compressed air supply and storage installation (12),
c) the pressure control device (7, 8, 9, 18, 22, 23, 24, 57, 58, 60, 70, 71, 80, 81, 82, 90) is designed, in a compressed air expansion mode, for connecting the compression space (4) to the compressed air supply and storage installation (12) for the conveyance of compressed air from the compressed air supply and storage installation (12) into the compression space (4),
c) the pressure control device (7, 8, 9, 18, 22, 23, 24, 57, 58, 60, 70, 71, 80, 81, 82, 90) is designed for changing over from the compressed air generation mode into the compressed air expansion mode, and vice versa, as a result of the electrical actuation of one or more electrically actuable valves (7, 23, 24, 57, 58, 60, 70, 71, 80, 81, 82, 90) of the valve assembly (7, 8, 9, 23, 24, 57, 58, 60, 70, 71, 80, 81, 82, 90) by means of the electronic control apparatus (18), **characterized in that** at least some of the electrically actuable valves (7, 23, 24, 57, 58, 60, 70, 71, 80, 81, 82, 90) are integrated in a cylinder (2), in particular into the cylinder head, and/or at least some of the electrically actuable valves (7, 23, 24, 57, 58, 60, 70, 71, 80, 81, 82, 90) are integrated into a crankcase (10) of the compressed air compressor (1).

2. Pressure control device according to Claim 1, **characterized in that** all or at least some of the electrically actuable valves (7, 23, 24, 57, 58, 60, 70, 71, 80, 81, 82, 90) are designed as piezoelectrically, electromagnetically, electromotively, electropneumatically or electrohydraulically actuable valves.

3. Pressure control device according to one of the preceding claims, **characterized in that** at least some of the electrically actuable valves (7, 23, 24, 57, 58, 60, 70, 71, 80, 81, 82, 90) precede the inlet connection (13) of the compressed air compressor (1) and/or at least some of the electrically actuable valves (7, 23, 24, 57, 58, 60, 70, 71, 80, 81, 82, 90) follow the outlet connection (14) of the compressed air compressor (1).

4. Pressure control device according to one of the preceding claims, **characterized in that** the valve assembly (7, 8, 9, 23, 24, 57, 58, 60, 70, 71, 80, 81, 82, 90) is connected to an additional tap (33) of the compression space (4) of the compressed air compressor (1) .

5. Pressure control device according to one of the preceding claims, **characterized in that** the valve assembly (7, 8, 9, 23, 24, 57, 58, 60, 70, 71, 80, 81, 82, 90) has a connecting valve which is designed for the direct connection of two compression spaces of a multicylinder compressed air compressor, and the pressure control device (7, 8, 9, 18, 22, 23, 24, 57, 58, 60, 70, 71, 80, 81, 82, 90) is designed, in an idling mode, for opening the connecting valve, with the result that the compression spaces connected to the connecting valve are connected to one another.

6. Pressure control device according to one of the preceding claims, **characterized in that** the volume of the compression space (4) is variable in time, in a volume reduction phase the volume decreasing in time and in a volume enlargement phase the volume increasing in time, and the pressure control device (7, 8, 9, 18, 22, 23, 24, 57, 58, 60, 70, 71, 80, 81, 82, 90) being designed, in the compressed air expansion mode, for connecting the compression space (4) to the compressed air supply and storage installation (12) during a volume enlargement phase and for connecting said compression space (4) to the atmosphere during a volume reduction phase, the connection to the compressed air supply and storage installation (12) being made only during part of the volume enlargement phase.

7. Pressure control device according to Claim 6, **characterized in that** the connection of the compression space (4) to the compressed air supply and storage installation (12) is made immediately at the commencement of the volume enlargement phase.

8. Pressure control device according to Claim 6 or 7, **characterized in that** the connection of the compression space (4) to the compressed air supply and storage installation (12) is made only during half the duration of the volume enlargement phase, in particular only during one eighth of the volume enlargement phase.

9. Pressure control device according to one of the preceding claims, **characterized in that** the pressure control device (7, 8, 9, 18, 22, 23, 24, 57, 58, 60, 70, 71, 80, 81, 82, 90) is designed for detecting overrun phases when the vehicle (100) is in operation and for operating the compressed air compressor (1) in the compressed air generation mode when an overrun phase is present, and **in that** the pressure control device (7, 8, 9, 18, 22, 23, 24, 57, 58, 60, 70, 71, 80, 81, 82, 90) is designed for detecting phases with an increased drive power demand when the vehicle (100) is in operation and for operating the compressed air compressor (1) in the compressed air expansion mode when a phase with an increased drive power demand is present.

10. Pressure control device according to one of the preceding claims, **characterized in that** the electronic control apparatus (18) receives from an engine control apparatus information on the angular position of the output shaft (103) of the vehicle engine (101).

11. Pressure control device according to one of the preceding claims, **characterized in that** the electronic control apparatus (18) is designed for evaluating in time the pressure peaks due to the compression action via at least one pressure sensor, for determining as a correcting value from this an angle difference between the angular position of the crankshaft of the compressed air compressor (1) and the angular position of the output shaft (103) of the vehicle engine (101) and for using the calculated correcting value for the in-phase control of the valve assembly (7, 8, 9, 23, 24, 57, 58, 60, 70, 71, 80, 81, 82, 90).

12. Pressure control device according to one of the preceding claims, **characterized in that** the pressure control device (7, 8, 9, 18, 22, 23, 24, 57, 58, 60, 70, 71, 80, 81, 82, 90) has a valve (8), via which a crankcase (10) of the compressed air compressor (1) can be acted upon with compressed air from the compressed air supply and storage installation (12).

13. Vehicle compressed air installation with a pressure control device (7, 8, 9, 18, 22, 23, 24, 57, 58, 60, 70, 71, 80, 81, 82, 90) and with a compressed air compressor (1) according to one of the preceding claims.

14. Vehicle compressed air installation according to Claim 13, **characterized in that** a heat exchanger (83) is provided, which, on the one hand, is thermally coupled to the engine (101) or to parts of the vehicle (100) which are heated by the engine (101) and, on the other hand, is thermally coupled to parts of the compressed air supply and storage installation (12) for dispensing the heat absorbed by the engine (101) or by the parts heated by the engine (101) to the compressed air in the compressed air supply and storage installation (12).

15. Vehicle compressed air installation according to Claim 14, **characterized in that** the pressure control device (7, 8, 9, 18, 22, 23, 24, 57, 58, 60, 70, 71, 80, 81, 82, 90) is designed for permitting the dispensing of heat to the compressed air supply and storage installation (12) only when the compressed air generation mode is not activated.

16. Vehicle compressed air installation according to one of Claims 13 to 15, having a compressed air compressor.

17. Method for controlling pressure in a vehicle (100), the vehicle (100) having a pressure control device according to Claim 1, with the features:
d) in a compressed air generation mode, compressed air is conducted from a compression space (4) of the compressed air compressor (1) into the compressed air supply and storage installation (12),
b) in a compressed air expansion mode, compressed air is conducted from the compressed air supply and storage installation (12) into the compression space (4),
**characterized in that**
c) the changeover from the compressed air generation mode into the compressed air expansion mode, and vice versa, takes place as a result of the electrical actuation of one or more electrically actuable valves (7, 23, 24, 57, 58, 60, 70, 71, 80, 81, 82, 90) of the valve assembly (7, 8, 9, 23, 24, 57, 58, 60, 70, 71, 80, 81, 82, 90) by means of an electronic control apparatus (18).

18. Method according to Claim 17, **characterized in that**, during an overrun phase when the vehicle (100) is in operation, the compressed air compressor (1) is operated in the compressed air generation mode and/or, in a in a phase with an increased drive power demand when the vehicle (100) is in operation, the compressed air compressor (1) is operated in the compressed air expansion mode.

## Revendications

1. Dispositif de commande de pression (7, 8, 9, 18, 22, 23, 24, 57, 58, 60, 70, 71, 80, 81, 82, 90) pour un véhicule (100), le véhicule (100) présentant au moins un moteur d'entraînement (101) pour générer une force d'entraînement du véhicule, une installation d'alimentation et de stockage d'air comprimé (12) et un compresseur d'air comprimé (1) accouplé ou pouvant être accouplé au moteur d'entraînement (101) du véhicule, et le dispositif de commande de pression (7, 8, 9, 18, 22, 23, 24, 57, 58, 60, 70, 71, 80, 81, 82, 90) présentant au moins un appareil de commande électronique (18) et au moins un dispositif de soupape (7, 8, 9, 23, 24, 57, 58, 60, 70, 71, 80, 81, 82, 90) pour la connexion commandable d'un espace de compression (4) du compresseur d'air comprimé (1) à l'installation d'alimentation et de stockage d'air comprimé (12), comprenant les caractéristiques suivantes :
b) le dispositif de commande de pression (7, 8, 9, 18, 22, 23, 24, 57, 58, 60, 70, 71, 80, 81, 82, 90) est prévu, dans un mode de génération d'air comprimé, pour relier l'espace de compression (4) à l'installation d'alimentation et de stockage d'air comprimé (12) afin de refouler de l'air comprimé depuis l'espace de compression (4) dans l'installation d'alimentation et de stockage d'air comprimé (12),
c) le dispositif de commande de pression (7, 8, 9, 18, 22, 23, 24, 57, 58, 60, 70, 71, 80, 81, 82, 90) est prévu, dans un mode de détente d'air comprimé, pour relier l'espace de compression (4) à l'installation d'alimentation et de stockage d'air comprimé (12) pour refouler de l'air comprimé depuis l'installation d'alimentation et de stockage d'air comprimé (12) dans l'espace de compression (4),
c) le dispositif de commande de pression (7, 8, 9, 18, 22, 23, 24, 57, 58, 60, 70, 71, 80, 81, 82, 90) est prévu pour commuter du mode de génération d'air comprimé au mode de détente d'air comprimé et inversement par actionnement électrique d'une ou plusieurs soupapes à commande électrique (7, 23, 24, 57, 58, 60, 70, 71, 80, 81, 82, 90) du dispositif de soupape (7, 8, 9, 23, 24, 57, 58, 60, 70, 71, 80, 81, 82, 90) par l'appareil de commande électronique (18),
**caractérisé en ce qu'**au moins une partie des soupapes à commande électrique (7, 23, 24, 57, 58, 60, 70, 71, 80, 81, 82, 90) sont intégrées dans un cylindre (2), en particulier dans la culasse, et/ou au moins une partie des soupapes à commande électrique (7, 23, 24, 57, 58, 60, 70, 71, 80, 81, 82, 90) sont intégrées dans un carter de vilebrequin (10) du compresseur d'air comprimé (1) .

2. Dispositif de commande de pression selon la revendication 1, **caractérisé en ce que** toutes les soupapes ou au moins une partie des soupapes à commande électrique (7, 23, 24, 57, 58, 60, 70, 71, 80, 81, 82, 90) sont réalisées sous forme de soupapes à commande piézoélectrique, électromagnétique, électromotrice, électropneumatique ou électrohydraulique.

3. Dispositif de commande de pression selon l'une quelconque des revendications précédentes, **caractérisé en ce qu'**au moins une partie des soupapes à commande électrique (7, 23, 24, 57, 58, 60, 70, 71, 80, 81, 82, 90) sont montées en amont du raccord d'admission (13) du compresseur d'air comprimé (1) et/ou au moins une partie des soupapes à commande électrique (7, 23, 24, 57, 58, 60, 70, 71, 80, 81, 82, 90) sont montées en aval du raccord d'échappement (14) du compresseur d'air comprimé (1).

4. Dispositif de commande de pression selon l'une quelconque des revendications précédentes, **caractérisé en ce que** le dispositif de soupape (7, 8, 9, 23, 24, 57, 58, 60, 70, 71, 80, 81, 82, 90) est relié à une prise supplémentaire (33) de l'espace de compression (4) du compresseur d'air comprimé (1).

5. Dispositif de commande de pression selon l'une quelconque des revendications précédentes, **caractérisé en ce que** le dispositif de soupape (7, 8, 9, 23, 24, 57, 58, 60, 70, 71, 80, 81, 82, 90) présente une soupape de connexion qui est prévue pour relier directement deux espaces de compression d'un compresseur d'air comprimé à plusieurs cylindres, et le dispositif de commande de pression (7, 8, 9, 18, 22, 23, 24, 57, 58, 60, 70, 71, 80, 81, 82, 90) est prévu, dans un mode de marche à vide, pour ouvrir la soupape de connexion de sorte que les espaces de compression raccordés à la soupape de connexion soient connectés les uns aux autres.

6. Dispositif de commande de pression selon l'une quelconque des revendications précédentes, **caractérisé en ce que** le volume de l'espace de compression (4) est variable dans le temps, dans une phase de réduction de volume, le volume diminuant dans le temps et, dans une phase d'augmentation de volume, le volume augmentant dans le temps, et le dispositif de commande de pression (7, 8, 9, 18, 22, 23, 24, 57, 58, 60, 70, 71, 80, 81, 82, 90) étant prévu, dans le mode de détente d'air comprimé, pour relier l'espace de compression (4) pendant une phase d'augmentation de volume à l'installation d'alimentation et de stockage d'air comprimé (12), et pendant une phase de réduction de volume, à l'atmosphère, la connexion à l'installation d'alimentation et de stockage d'air comprimé (12) n'étant établie que pendant une partie de la phase d'augmentation de volume.

7. Dispositif de commande de pression selon la revendication 6, **caractérisé en ce que** la connexion de l'espace de compression (4) à l'installation d'alimentation et de stockage d'air comprimé (12) est établie directement au début de la phase d'augmentation de volume.

8. Dispositif de commande de pression selon la revendication 6 ou 7, **caractérisé en ce que** la connexion de l'espace de compression (4) à l'installation d'alimentation et de stockage d'air comprimé (12) n'est établie que pendant la moitié de la durée de la phase d'augmentation de volume, en particulier seulement pendant un huitième de la phase d'augmentation de volume.

9. Dispositif de commande de pression selon l'une quelconque des revendications précédentes, **caractérisé en ce que** le dispositif de commande de pression (7, 8, 9, 18, 22, 23, 24, 57, 58, 60, 70, 71, 80, 81, 82, 90) est prévu pour détecter des phases de poussée pendant le fonctionnement du véhicule (100) et, en présence d'une phase de poussée, pour faire fonctionner le compresseur d'air comprimé (1) en mode de génération d'air comprimé, et **en ce que** le dispositif de commande de pression (7, 8, 9, 18, 22, 23, 24, 57, 58, 60, 70, 71, 80, 81, 82, 90) est prévu pour détecter des phases avec un besoin accru en force de propulsion pendant le fonctionnement du véhicule (100), et en présence d'une phase avec un besoin accru en force de propulsion, pour faire fonctionner le compresseur d'air comprimé (1) en mode de détente d'air comprimé.

10. Dispositif de commande de pression selon l'une quelconque des revendications précédentes, **caractérisé en ce que** l'appareil de commande électronique (18) reçoit d'un appareil de commande du moteur une information concernant la position angulaire de l'arbre de prise de force (103) du moteur du véhicule (101).

11. Dispositif de commande de pression selon l'une quelconque des revendications précédentes, **caractérisé en ce que** l'appareil de commande électronique (18) est prévu pour analyser, par le biais d'au moins un capteur de pression, en fonction du temps les pics de pression sur la base de l'opération de compression, pour en déduire, en tant que valeur de correction, une différence angulaire entre la position angulaire du vilebrequin du compresseur d'air comprimé (1) et la position angulaire de l'arbre de prise de force (103) du moteur du véhicule (101) et pour utiliser la valeur de correction calculée pour la commande de phase correcte du dispositif de soupape (7, 8, 9, 23, 24, 57, 58, 60, 70, 71, 80, 81, 82, 90).

12. Dispositif de commande de pression selon l'une quelconque des revendications précédentes, **caractérisé en ce que** le dispositif de commande de pression (7, 8, 9, 18, 22, 23, 24, 57, 58, 60, 70, 71, 80, 81, 82, 90) présente une soupape (8) par le biais de laquelle un carter de vilebrequin (10) du compresseur d'air comprimé (1) peut être sollicité avec de l'air comprimé provenant de l'installation d'alimentation et de stockage d'air comprimé (12).

13. Installation d'air comprimé de véhicule comprenant un dispositif de commande de pression (7, 8, 9, 18, 22, 23, 24, 57, 58, 60, 70, 71, 80, 81, 82, 90) et un compresseur d'air comprimé (1) selon l'une quelconque des revendications précédentes.

14. Installation d'air comprimé de véhicule selon la revendication 13, **caractérisée en ce qu'**il est prévu un échangeur de chaleur (83) qui est accouplé thermiquement d'une part au moteur d'entraînement (101) ou à des parties du véhicule (100) chauffées par le moteur d'entraînement (101) et d'autre part qui est accouplé à des parties de l'installation d'alimentation et de stockage d'air comprimé (12) pour dissiper la chaleur reçue par le moteur d'entraînement (101) ou par les parties chauffées par le moteur d'entraînement (101) dans l'air comprimé dans l'installation d'alimentation et de stockage d'air comprimé (12).

15. Installation d'air comprimé de véhicule selon la revendication 14, **caractérisée en ce que** le dispositif de commande de pression (7, 8, 9, 18, 22, 23, 24, 57, 58, 60, 70, 71, 80, 81, 82, 90) est prévu pour n'autoriser la dissipation de la chaleur dans l'installation d'alimentation et de stockage d'air comprimé (12) que lorsque le mode de génération d'air comprimé n'est pas activé.

16. Installation d'air comprimé de véhicule selon l'une quelconque des revendications 13 à 15, comprenant un compresseur d'air comprimé.

17. Procédé de commande de pression dans un véhicule (100), le véhicule (100) présentant un dispositif de commande de pression selon la revendication 1, comprenant les caractéristiques suivantes :
d) dans un mode de génération d'air comprimé, de l'air comprimé est conduit depuis un espace de compression (4) du compresseur d'air comprimé (1) dans l'installation d'alimentation et de stockage d'air comprimé (12),
b) dans un mode de détente d'air comprimé, de l'air comprimé est conduit depuis l'installation d'alimentation et de stockage d'air comprimé (12) dans l'espace de compression (4),
**caractérisé en ce que**
c) la commutation du mode de génération d'air comprimé au mode de détente d'air comprimé et inversement s'effectue par actionnement électrique d'une ou plusieurs soupapes à commande électrique (7, 23, 24, 57, 58, 60, 70, 71, 80, 81, 82, 90) du dispositif de soupape (7, 8, 9, 23, 24, 57, 58, 60, 70, 71, 80, 81, 82, 90) par un appareil de commande électronique (18).

18. Procédé selon la revendication 17, **caractérisé en ce que** dans le cas d'une phase de poussée pendant le fonctionnement du véhicule (100), le compresseur d'air comprimé (1) fonctionne en mode de génération d'air comprimé et/ou dans une dans le cas d'une phase avec un besoin accru en force de propulsion pendant le fonctionnement du véhicule (100), le compresseur d'air comprimé (1) fonctionne en mode de détente d'air comprimé.
